(19) Europäisches Patentamt
European Patent Office
Office européen des brevets

(11) EP 1 236 732 B1

(12) **EUROPÄISCHE PATENTSCHRIFT**

(45) Veröffentlichungstag und Bekanntmachung des Hinweises auf die Patenterteilung:
**13.04.2005 Patentblatt 2005/15**

(51) Int Cl.[7]: **C07F 9/28**

(21) Anmeldenummer: **02001914.7**

(22) Anmeldetag: **31.01.2002**

(54) **Fluoralkylphosphat-Salze und Verfahren zur Herstellung dieser Substanzen**

Fluoroalkylphosphate salts and preparation thereof

Sels de Phosphates de fluoroalkyl ET PREPARATION DE CEUX-CI

(84) Benannte Vertragsstaaten:
**AT BE CH CY DE DK ES FI FR GB GR IE IT LI LU MC NL PT SE TR**

(30) Priorität: **24.02.2001 DE 10109032**

(43) Veröffentlichungstag der Anmeldung:
**04.09.2002 Patentblatt 2002/36**

(73) Patentinhaber: **MERCK PATENT GmbH**
**64293 Darmstadt (DE)**

(72) Erfinder:
- **Schmidt, Michael**
  **64342 Seeheim-Jugenheim (DE)**
- **Kühner, Andreas,**
  **64289 Darmstadt (DE)**
- **Ignatyev, Nikolai,**
  **47058 Duisburg (DE)**
- **Satori, Prof. Dr. Peter**
  **86919 Utting (DE)**

(56) Entgegenhaltungen:
**WO-A-98/15562**

- **FILD, M. ET AL: "Methylene compounds of nonmetals. V. Methylenediphosphorus halides" Z. ANORG. ALLG. CHEM. (1987), 555, 109-17 , XP001069730**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Fluoralkylphosphat-Salze sowie Verfahren zu ihrer Herstellung. Des weiteren betrifft die vorliegende Erfindung Gemische, die die erfindungsgemäßen Fluoralkylphosphat-Salze enthalten sowie die Verwendung dieser Salze bzw. dieser Gemische in Elektrolyten, primären Batterien, sekundären Batterien, Kondensatoren, Superkondensatoren oder galvanischen Zellen.

Die Verbreitung von tragbaren elektronischen Geräten, wie z.B. Laptop und Palmtop-Computern, Mobiltelefonen oder Videokameras und damit auch der Bedarf nach leichten und leistungsfähigen Batterien hat in den letzten Jahren weltweit dramatisch zugenommen.

Angesichts dieses sprunghaft gestiegenen Bedarfs nach Batterien und den damit verbundenen ökologischen Problemen kommt der Entwicklung von wiederaufladbaren Batterien mit einer langen Lebensdauer eine stetig wachsende Bedeutung zu.

Seit den frühen neunziger Jahren werden wiederaufladbare Lithiumionenbatterien kommerziell angeboten. Die meisten dieser Batterien arbeiten mit Lithiumhexafluorophosphat als Leitsalz. Dieses Lithiumsalz stellt jedoch eine extrem hydrolyseempfindliche Verbindung mit einer geringen thermischen Stabilität dar, so daß die entsprechenden Lithiumbatterien aufgrund dieser Eigenschaften des Salzes nur durch sehr aufwendige und somit auch sehr kostenintensive Verfahren hergestellt werden können.
Die Empfindlichkeit mindert zudem die Lebensdauer sowie die Leistung dieser Lithiumbatterien und beeinträchtigt auch deren Einsatz unter extremen Bedingungen, wie z.B. hohen Temperaturen.

Es wurden daher für Lithiumbatterien als Leitsalze in Elektrolyten von Hochenergie-Lithiumbatterien Lithiumperfluoroalkylfluorophosphate entwickelt, die gegenüber dem herkömmlichen $LiPF_6$ bessere chemische und elektrochemische Stabilitäten und eine hohe Entladungseffizienz aufweisen. Die hohe Hydrolysestabilität von Lithium-perfluoroalkylfluorophosphaten macht sie interessant als starke Lithiumbatterien in elektrischen Fahrzeugen (Schmidt M., et al. "Lithium fiuoroalkylphosphates: a new class of conducting salts for electrolytes for high energy lithium-ion batteries", J. of Power Sources, Vol. 97-98, S. 557-560, WO 98/15562 (Merck KGaA), DE 100 08 955 C2 (Merck KGaA), N. Ignat'ev and P. Sartori, J. of Fluorine Chem., 101 (2000), S. 203-207).
Der Nachteil dieser Substanzen liegt in ihrem hohen Molekulargewicht und des daraus resultierenden geringen Anteils $Li^+$-Kationen pro Gewichtseinheit Leitsalz.

Bei der Herstellung von Methandiphosphor-Halogenverbindungen durch M. Fild et al, Z. Anorg. Alig. Chem, 1987, 555, 109-107, wurde auch das Kaliumsalz $K_2[F_5PCH_2PF_5]$ synthetisiert.

Die Aufgabe der vorliegenden Erfindung bestand daher in der Bereitstellung von stabilen Leitsalzen mit einem höheren Anteil an Kationen pro Gewichtseinheit Leitsalz.
Eine weitere Aufgabe der Erfindung war es auch, die Lebensdauer und die Leistung von primären und sekundären Batterien, Kondensatoren, Superkondensatoren und/oder galvanischen Zellen zu verlängern bzw. zu verbessern.

Diese Aufgabe wird durch die Bereitstellung von neuen Fluoralkylphosphat-Salzen der allgemeinen Formel (I) gelöst,

$$(M^{a+})_b[(C_nF_{2n+1-m}H_m)_yPF_{5-y}(CR_1R_2)_xPF_{5-y}(C_nF_{2n+1-m}H_m)_y]^{(2-)}(a*b / 2) \quad (I)$$

worin
$M^{a+}$ ein einwertiges, zweiwertiges oder dreiwertiges Kation,
a = 1, 2 oder 3,
b = 2 für a = 1,
b = 2 für a = 3,
b = 1 für a = 2
und jeweils
$1 \leq n \leq 8$,
$0 \leq m \leq 2$ für n = 1 oder 2,
$0 \leq m \leq 4$ für $3 \leq n \leq 8$,
$1 \leq x \leq 12$,
$0 \leq y \leq 2$,
wobei $R_1$ und $R_2$ identisch oder unterschiedlich sind und ausgewählt sind aus der Gruppe der Fluor-, Wasserstoff-, Alkyl-, Fluoralkyl und Perfluoralkylsubstituenten und,
wobei jeweils die Substituenten $(C_nF_{2n+1-m}H_m)$ identisch oder unterschiedlich sind
und die Verbindungen mit $M^{a+} = K^+$, $R_1$ und $R_2$ = H und y = 0 ausgenommen sind.

Bevorzugt sind erfindungsgemäße Fluoralkylphosphat-Salze der allgemeinen Formel (I), in denen das Kation

$M^{a+}$ ein Alkalimetall-Kation, vorzugsweise ein Lithium-, Natrium- oder Kalium-Kation, besonders bevorzugt ein Lithium-Kation, ein Magnesium- oder Aluminium-Kation ist.

Des weiteren sind auch Fluoralkylphosphat-Salze der allgemeinen Formel (I) bevorzugt, in denen das Kation $M^{a+}$ ein organisches Kation, vorzugsweise ein Nitrosyl-Kation, ein Nitryl-Kation oder ein Kation der allgemeinen Formel $[N(R^7)_4]^+$, $[P(R^7)_4]^+$, $[P(N(R^7)_2)_4]^+$ oder $[C(N(R^7)_2)_3]^+$ ist, wobei die Reste $R^7$, jeweils gleich oder verschieden, für H, Alkyl ($C_{1-10}$) oder A stehen,

wobei gegebenenfalls H-Atome der Alkylkette durch Fluor oder einen gegebenenfalls Heteroatome aufweisenden aromatischen Rest oder einen vorzugsweise 5-6 gliedrigen Cycloalkylrest substituiert sein können, und/oder C-Atome der Alkylkette durch Heteroatome, vorzugsweise Sauerstoff, ausgetauscht sein können.

Als aromatischer oder cycloaliphatischer Rest A, der gegebenenfalls Heteroatome aufweisen kann, können alle dem Fachmann bekannten, zur Herstellung von $[N(R^7)_4]^+$, $[P(R^7)_4]^+$, $[P(N(R^7)_2)_4]^+$ oder $[C(N(R^7)_2)_3]^+$-Kationen geeigneten Aromaten, Heteroaromaten oder Cycloaliphaten eingesetzt werden.

Vorzugsweise steht A jeweils für einen 5- oder 6-gliedrigen, gegebenenfalls Stickstoff- und/oder Schwefel- und/oder Sauerstoffatome aufweisenden aromatischen Rest oder einen vorzugsweise 5- oder 6-gliedrigen Cycloalkylrest, besonders bevorzugt für einen Phenyl- oder Pyridin-Rest.

In einer weiteren bevorzugten Ausführungsform der vorliegenden Erfindung ist das Kation $M^{a+}$ ein heteroaromatisches Kation ausgewählt aus der Gruppe der heteroaromatischen Kationen der allgemeinen Formel (II) bis (IX),:

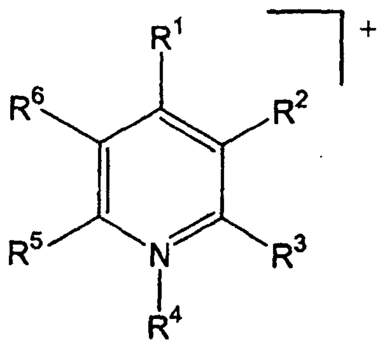
(II)

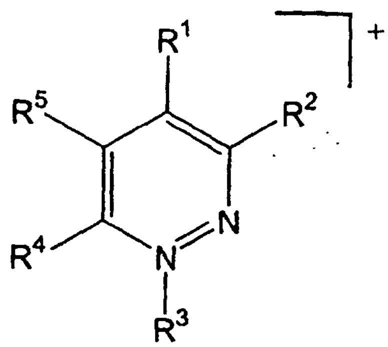
(III)

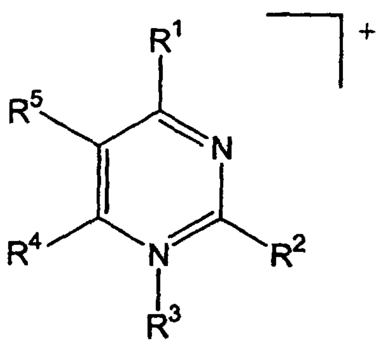
(IV)

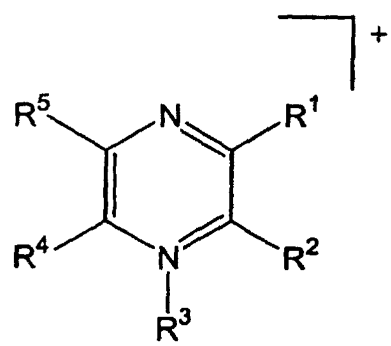
(V)

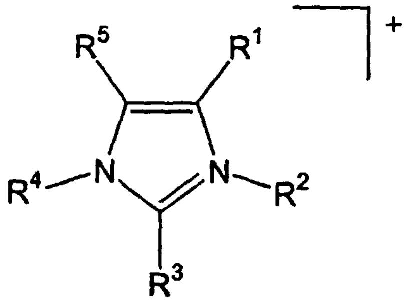

(VI)

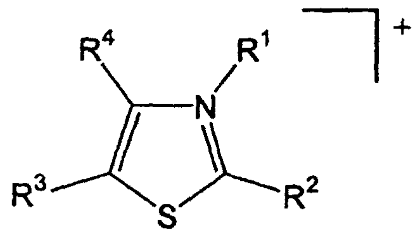

(VII)

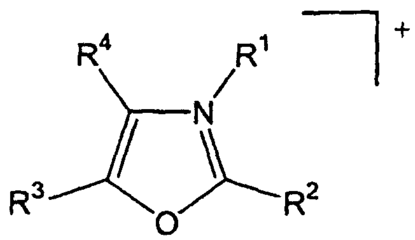

(VIII)

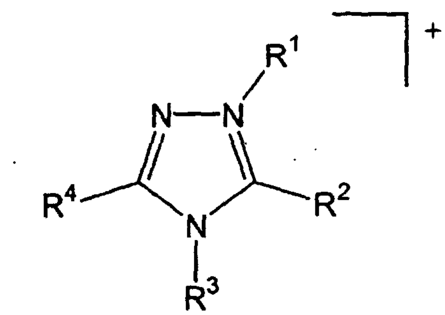

(IX)

Die Reste $R^1$ bis $R^6$, die jeweils gleich oder verschieden sein können, stehen für einen H-Rest, einen Halogen-Rest, vorzugsweise einen Fluor-Rest, oder für einen $C_{1-8}$-Alkyl-Rest, der gegebenenfalls mit den Substituenten F, Cl, $N(C_rF_{(2r+1-s)}H_s)_2$, $O(C_rF_{(2r+1-s)}H_s)$, $SO_2(C_rF_{(2r+1-s)}H_s)$ oder $C_rF_{(2r+1-s)}H_s$ substituiert sein kann, in denen $1 \leq r \leq 6$ und $0 \leq s \leq 13$ bedeuten.
Es können auch zwei der Reste $R^1$ bis $R^6$ gemeinsam einen $C_{1-8}$-Alkyl-Rest bedeuten, der gegebenenfalls mit den Substituenten F, Cl, $N(C_rF_{(2r+1-s)}H_s)_2$, $O(C_rF_{(2r+1-s)}H_s)$, $SO_2(C_rF_{(2r+1-s)}H_s)$ oder $C_rF_{(2r+1-s)}H_s$ substituiert sein kann, in denen $1 \leq r \leq 6$ und $0 \leq s \leq 2r+1$ bedeuten.
Es ist zu beachten, daß bei den heteroaromatischen Kationen der allgemeinen Formel (II) bis (IX) die Reste $R^1$ bis $R^6$ keine Halogene sein können, wenn die Reste $R^1$ bis $R^6$ direkt an Stickstoff gebunden sind.

Ebenfalls bevorzugt sind Fluoralkylphosphat-Salze der allgemeinen Formel (I), in denen $1 \leq n \leq 6$, vorzugsweise $1 \leq n \leq 3$ ist.

Auch bevorzugt sind Fluoralkylphosphat-Salze der allgemeinen Formel (I), in denen $1 \leq x \leq 8$, vorzugsweise $1 \leq x \leq 4$ ist.

Besonders bevorzugt sind Fluoralkylphosphat-Salze der allgemeinen Formel (I), in denen m = 0 ist.

Ganz besonders bevorzugt sind Fluoralkylphosphat-Salze der allgemeinen Formel (I), in denen y = 2 ist.

Auch ganz besonders bevorzugt sind die erfindungsgemäßen Fluoralkylphosphat-Salze der allgemeinen Formel (I), in denen $R_1$ und $R_2$ = Fluor sind.

Besonders bevorzugt sind die Fluoralkylphosphat-Salze der allgemeinen Formel (I):

$$(Li^+)_2[(C_2F_5)_2PF_3(CF_2)_2PF_3(C_2F_5)_2]^{(2-)}$$

und

$$(N(C_2H_5)_4^+)_2[(C_2F_5)_2PF_3(CF_2)_2PF_3(C_2F_5)_2]^{(2-)}$$

Die erfindungsgemäßen Salze der allgemeinen Formel (I) können sowohl in reiner Form als auch in Form ihrer Mischungen als Leitsalze in Elektrolyten, primären und sekundären Batterien, Kondensatoren, Superkondensatoren und/oder galvanischen Zellen eingesetzt werden. Vorzugsweise werden die erfindungsgemäßen Salze in reiner Form als Leitsalze verwendet, da auf diese Weise eine besonders gute Reproduzierbarkeit der elektrochemischen Eigenschaften gewährleistet werden kann.
Es ist aber ebenfalls möglich, die erfindungsgemäßen Salze in Mischung mit weiteren, dem Fachmann bekannten Salzen als Leitsalze zu verwenden.

Sie können in Anteilen zwischen 1 und 99% in Kombination mit anderen Leitsalzen, die in elektrochemischen Zellen Anwendung finden, verwendet werden. Geeignet sind z.B. Leitsalze ausgewählt aus der Gruppe $LiPF_6$, $LiBF_4$, $LiClO_4$, $LiAsF_6$, $LiCF_3SO_3$, $LiN(CF_3SO_2)_2$, $LiN(CF_3CF_2SO_2)_2$, $LiC(CF_3SO_2)_3$ oder Lithiumfluor-alkylphosphate der allgemeinen Formel $Li[PF_{(6-c)}(C_dF_{2d+1})]$ mit $1 \leq c \leq 5$ und
oder Lithiumfluor-alkylphosphate der allgemeinen Formel $Li[PF_{(6-c)}(C_dF_{2d+1})]$ mit $1 \leq c \leq 5$ und
$1 \leq d \leq 8$, sowie $LiN[SO_2(C_eF_{2e+1})]_2$, $LiCSO_2(C_eF2_{e+1})]_3$ und $Li[SO_3(C_eF_{2e+1})]$ mit $2 \leq e \leq 8$ und deren Mischungen.

Ebenso können die Salze der Formel (I) und deren Mischungen in Elektrolyten für elektrochemische Zellen verwendet werden.
Die Elektrolyte können auch organische Isocyanate (DE 199 44 603, Diese Literatur wird hiermit als Referenz eingeführt und gilt somit als Teil der Offenbarung) zur Herabsetzung des Wassergehaltes enthalten.

Ein weiterer Gegenstand der Erfindung betrifft ein Verfahren zur Herstellung von erfindungsgemäßen Fluoralkylphosphat-Salzen. Bei diesem Verfahren wird wenigstens ein α,ω-Bis[fluoro(fluoroalkyl)fluorphosphorano)fluoralkan mit wenigstens einem Fluoridsalz der allgemeinen Formel (X)

$$(M^{a+})[F^-]_a \qquad (X)$$

worin ($M^{a+}$) und a die vorstehend genannte Bedeutung haben, in Lösung zu einem erfindungsgemäßen Fluoralkylphosphat-Salz der allgemeinen Formel (I), wobei $K_2[F_5PCH_2PF_5]$ ausgenommen ist, umgesetzt und dieses gegebenenfalls nach üblichen Methoden gereinigt und/oder isoliert wird.

In einer bevorzugten Ausführungsform des erfindungsgemäßen Verfahrens sind die α,ω-Bis[fluoro(fluoroalkyl)fluorphosphorano)fluoralkane wenigstens eine Verbindung der allgemeinen Formel (XI),

$$(C_nF_{2n+1-m}H_m)_yPF_{4-y}(CR_1R_2)_xPF_{4-y}(C_nF_{2n+1-m}H_m)_y \qquad (XI)$$

worin
$1 \leq n \leq 8$, $0 \leq m \leq 2$ für n = 1 oder 2, $0 \leq m \leq 4$ für $3 \leq n \leq 8$, $1 \leq x \leq 12$, $0 \leq y \leq 2$,
wobei $R_1$ und $R_2$ identisch oder unterschiedlich sind und ausgewählt sind aus der Gruppe der Fluor-, Wasserstoff-, Alkyl-, Fluoralkyl und Perfluoralkylsubstituenten, und
wobei jeweils die Substituenten $(C_nF_{2n+1-m}H_m)$ identisch oder unterschiedlich sind.

Von den erfindungsgemäßen Verfahren sind solche bevorzugt, in denen die Verbindung der allgemeinen Formel (X) in einem bis zu 10fachen, vorzugsweise einem bis zu 5fachen, besonders bevorzugt in einem bis zu 2fachen Überschuß, bezogen auf die Menge an Fluoro-α,ω-bis(alkylfluorophosphorano)alkan(en) eingesetzt wird.
Ganz besonders bevorzugt werden Verbindungen der allgemeinen Formel (X) in zweifach äquimolarer Menge zum eingesetzten (Fluoro-α,ω-alkandiyl)bis[fluoro(fluoroalkyl)]phosphoran eingesetzt.

Bei den erfindungsgemäßen Verfahren erfolgt die Umsetzung mit dem Fluoridsalz der allgemeinen Formel (X) vorzugsweise bei einer Temperatur von -35 bis +80 °C, vorzugsweise -20 bis +50 °C, besonders bevorzugt 10 bis 25 °C.

Geeignete Lösungsmittel für die vorgenannten Verfahren sind organische Carbonate, vorzugsweise Ethylencarbonat, Propylencarbonat, Butylencarbonat, Dimethylcarbonat, Diethylcarbonat, Ethylmethylcarbonat oder Methylpropylcarbonat, organische Ester, vorzugsweise Methylformiat, Ethylformiat, Methylacetat, Ethylacetat, Methylpropionat, Ethylpropionat, Methylbutyrat, Ethylbutyrat, γ-Butyrolacton, organische Ether, vorzugsweise Diethylether, Dimethoxyethan, Diethoxyethan, organische Amide, vorzugsweise Dimethylformamid oder Dimethylacetamid, schwefelhaltige Lösungsmittel, vorzugsweise Dimethylsulfoxid, Dimethylsulfid, Diethylsulfid oder Propansulfon, aprotische Lösungsmittel, vorzugsweise Acetonitril, Acrylnitril, Propionitril oder Aceton, oder zumindest teilweise fluorierte Derivate der vorstehend genannten Lösungsmittel oder Gemische aus wenigstens zwei dieser Lösungsmittel und/oder fluorierten Derivaten dieser Lösungsmittel.

Die erfindungsgemäßen Fluoralkylphosphat -Salze der allgemeinen Formel (I) eignen sich auch zur Verwendung in festen Elektrolyten. Unter festen Elektrolyten werden dabei im Sinne der Erfindung sowohl Polymerelektrolyte

verstanden, die üblicherweise ein gegebenenfalls vernetztes Polymeres und ein Leitsalz aufweisen, als auch Gelelektrolyte, die üblicherweise neben einem gegebenenfalls vernetzten Polymeren und einem Leitsalz zusätzlich wenigstens ein Lösungsmittel enthalten.

Ein weiterer Gegenstand der vorliegenden Erfindung ist daher auch ein Gemisch enthaltend

a) wenigstens ein Fluoralkylphosphat-Salz der allgemeinen Formel (I)
und

b) wenigstens ein Polymeres.

Ein Gemisch im Sinne der vorliegenden Erfindung umfaßt reine Mischungen der Komponenten a) und b), Mischungen, in denen das Salz der Komponente a) in dem Polymeren der Komponente b) eingeschlossen ist und Mischungen, in denen zwischen dem Salz der Komponente a) und dem Polymeren der Komponente b) chemische und/oder physikalische Bindungen bestehen.

In einer bevorzugten Ausführungsform der vorliegenden Erfindung enthält das erfindungsgemäße Gemisch 5 bis 90 Gew.-% der Komponente a) und 95 bis 5 Gew.-% der Komponente b), besonders bevorzugt 10 bis 80 Gew.-% der Komponente a) und 90 bis 20 Gew.-% der Komponente b). Die angegebenen Gewichtsverhältnisse beziehen sich jeweils auf die Summe der Komponenten a) und b).

Als Komponente b) enthält das erfindungsgemäße Gemisch vorzugweise ein Homopolymeres oder Copolymeres von Acrylnitril, Vinylidendifluorid, Methyl(meth)acrylat, Tetrahydrofuran, Ethylenoxid, Siloxan, Phosphazen oder eine Mischung aus wenigstens zwei der vorstehend genannten Homopolymeren und/oder Copolymeren.

Besonders bevorzugt ist die Komponente b) ein Homopolymeres oder Copolymeres von Vinylidendifluorid, Acrylnitril, Methyl(meth)acrylat, Tetrahydrofuran, ganz besonders bevorzugt ein Homopolymeres oder Copolymeres von Vinylidendifluorid.

Diese Homo- und Copolymerisate des Vinylidendifluorids werden unter der Bezeichnung Kynar® und Kynarflex® von der Firma Atofina Chemicals, Inc. sowie unter der Bezeichnung Solef® von der Firma Solvay am Markt geführt.

Die erfindungsgemäß zum Einsatz kommenden Polymere können auch zumindest teilweise vernetzt sein. Die Vernetzung kann mit bekannten Vernetzungsmitteln nach üblichen, dem Fachmann bekannten Methoden erfolgen.

Neben den Fluoralkylphosphat -Salzen der allgemeinen Formel (I) sowie den Polymeren kann das erfindungsgemäße Gemisch zusätzlich ein Lösungsmittel oder ein Lösungsmittelgemisch aus zwei oder mehreren Lösungsmitteln aufweisen.

Bevorzugte Lösungsmittel sind organische Carbonate, vorzugsweise Ethylencarbonat, Propylencarbonat, Butylencarbonat, Dimethylcarbonat, Diethylcarbonat, Ethylmethylcarbonat oder Methylpropylcarbonat, organische Ester, vorzugsweise Methylformiat, Ethylformiat, Methylacetat, Ethylacetat, Methylpropionat, Ethylpropionat, Methylbutyrat, Ethylbutyrat, □-Butyrolacton, organische Ether, vorzugsweise Diethylether, Dimethoxyethan, Diethoxyethan, organische Amide, vorzugsweise Dimethylformamid oder Dimethylacetamid, schwefelhaltige Lösungsmittel, vorzugsweise Dimethylsulfoxid, Dimethylsulfid, Diethylsulfid oder Propansulfon, aprotische Lösungsmittel, vorzugsweise Acetonitril, Acrylnitril oder Aceton, oder zumindest teilweise fluorierte Derivate der vorstehend genannten Lösungsmittel oder Gemische aus wenigstens zwei dieser Lösungsmittel und/oder fluorierten Derivaten dieser Lösungsmittel.

Ein weiterer Gegenstand der vorliegenden Erfindung ist die Verwendung wenigstens eines erfindungsgemäßen Fluoralkylphosphat-Salzes oder eines erfindungsgemäßen Gemisches in Elektrolyten, primären Batterien, sekundären Batterien, Kondensatoren, Superkondensatoren und/oder galvanischen Zellen, ggf. auch in Kombination mit weiteren, bekannten Leitsalzen und/oder Zusatzstoffen.

Weitere Gegenstände der Erfindung sind Elektrolyte, primäre und sekundäre Batterien, Kondensatoren, Superkondensatoren und galvanischen Zellen, die wenigstens ein erfindungsgemäßes Fluoralkylphosphat-Salz der allgemeinen Formel (I) oder ein erfindungsgemäßes Gemisch und ggf. weitere Leitsalze und/oder Zusatzstoffe enthalten. Weitere Leitsalze und Zusatzstoffe sind dem Fachmann z.B. aus Doron Auerbach, Nonaqueous Electrochemistry, Marc Dekker Inc., New York 1999; D.Linden, Handbook of Batteries, Second Edition, McGraw-Hill Inc., New York 1995 und G. Mamantov und A.I. Popov, Chemistry of Nonaqueous Solutions, Current Progress, VCH Verlagsgesellschaft, Weinheim 1994 bekannt.

Erfindungsgemäße Elektrolyte weisen bevorzugt eine Konzentration der (des) erfindungsgemäßen Fluoralkylphosphat-Salze(s) von 0,01 bis 3 mol/l, vorzugsweise 0,01 bis 2 mol/l, besonders bevorzugt 0,1 bis 1,5 mol/l auf.

Als Lösungsmittel für die erfindungsgemäßen Salze enthalten die Elektrolyte vorzugsweise organische Carbonate, vorzugsweise Ethylencarbonat, Propylencarbonat, Butylencarbonat, Dimethylcarbonat, Diethylcarbonat, Ethylmethylcarbonat oder Methylpropylcarbonat, organische Ester, vorzugsweise Methylformiat, Ethylformiat, Methylacetat, Ethylacetat, Methylpropionat, Ethylpropionat, Methylbutyrat, Ethylbutyrat, γ-Butyrolacton, organische Ether, vorzugsweise Diethylether, Dimethoxyethan, Diethoxyethan, organische Amide, vorzugsweise Dimethylformamid oder

Dimethylacetamid, schwefelhaltige Lösungsmittel, vorzugsweise Dimethylsulfoxid, Dimethylsulfid, Diethylsulfid oder Propansulfon, aprotische Lösungsmittel, vorzugsweise Acetonitril, Acrylnitril oder Aceton, oder zumindest teilweise fluorierte Derivate der vorstehend genannten Lösungsmittel oder Gemische aus wenigstens zwei dieser Lösungsmittel und/oder fluorierten Derivaten dieser Lösungsmittel.

Die erfindungsgemäßen Fluoralkylphosphat-Salze sowie die erfindungsgemäßen Gemische haben den Vorteil, daß sie über einen sehr langen Zeitraum in Gegenwart von Wasser keinerlei oder fast keine Anzeichen einer Zersetzung zeigen und in den meisten Lösungsmitteln oder Lösungsmittelgemischen eine gute bis sehr gute Löslichkeit aufweisen.

Des weiteren weisen sie sowohl im festen als auch im gelösten Zustand eine hohe thermische Stabilität sowie eine hohe chemische Stabilität auf. So sind die erfindungsgemäßen Salze und Gemische beispielsweise gegenüber starken Oxidationsmitteln, wie z.B. gegen hochoxidierende Elektrodenmaterialien wie beispielsweise $LiMn_2O_4$, $LiNiO_2$ oder $LiCoO_2$, stabil.

Diese Eigenschaften ermöglichen es, Elektrolyte, Batterien, Kondensatoren, Superkondensatoren und galvanische Zellen, die diese Leitsalze enthalten, unter extremen Bedingungen einzusetzen, wie z.B. bei hohen Temperaturen, ohne daß deren Lebensdauer und Leistung durch diese Bedingungen beeinträchtigt wird.

Desweiteren zeichnen sich die entsprechenden Batterien, Kondensatoren, Superkondensatoren und galvanischen Zellen durch eine sehr gute Spannungskonstanz, ein uneingeschränkte Funktionsfähigkeit über viele Lade- und Entladezyklen sowie durch geringe Herstellungskosten aus.

Der Einsatz der erfindungsgemäßen Fluoralkylphosphat-Salze oder der erfindungsgemäßen Gemische in großen Batterien, wie sie z.B. in Elektrostraßenfahrzeugen oder Hybridstraßenfahrzeugen verwendet werden, ist ebenfalls sehr vorteilhaft, da bei einer Beschädigung der Batterien, wie z.B. im Falle eines Unfalls, auch bei Kontakt mit Wasser, beispielsweise durch Luftfeuchtigkeit oder Löschwasser kein toxischer und stark ätzender Fluorwasserstoff gebildet wird.

Es können die erfindungsgemäßen Verbindungen und deren Mischungen in Elektrolyten für elektrochemische Zellen verwendet werden. Sie können als Leitsalze oder Additive eingesetzt werden. Ebenso können sie in Anteilen zwischen 1 und 99% in Kombination mit anderen Leitsalzen, die in elektrochemischen Zellen Anwendung finden, verwendet werden. Geeignet sind z.B. Leitsalze ausgewählt aus der Gruppe $LiPF_6$, $LiBF_4$, $LiClO_4$, $LiAsF_6$, $LiCF_3SO_3$, $LiN(CF_3SO_2)_2$, $LiN(CF_3CF_2SO_2)_2$ oder $LiC(CF_3SO_2)_3$ und deren Mischungen.

Die Elektrolyte können auch organische Isocyanate (DE 199 44 603) zur Herabsetzung des Wassergehaltes enthalten.

Auch Verbindungen der allgemeinen Formel

$$[([R^1(CR^2R^3)_k]_lA_x)_yKt]^+ \; ^-N(CF_3)_2$$

wobei

Kt N, P, As, Sb, S, Se

A N, P, P(O), O, S, S(O), $SO_2$, As, As(O), Sb, Sb(O)

$R^1$, $R^2$ und $R^3$

gleich oder verschieden

H, Halogen, substituiertes und/oder unsubstituiertes Alkyl $C_nH_{2n+1}$, substituiertes und/oder unsubstituiertes Alkenyl mit 1-18 Kohlenstoffatomen und einer oder mehreren Doppelbindungen, substituiertes und/oder unsubstituiertes Alkinyl mit 1-18 Kohlenstoffatomen und einer oder mehreren Dreifachbindungen, substituiertes und/oder unsubstituiertes Cycloalkyl $C_mH_{2m-1}$, ein- oder mehrfach substituiertes und/oder unsubstituiertes Phenyl, substituiertes und/oder unsubstituiertes Heteroaryl,

A kann in verschiedenen Stellungen in $R^1$, $R^2$ und/oder $R^3$ eingeschlossen sein,

Kt kann in cyclischen oder heterocyclischen Ring eingeschlossen sein,

die an Kt gebundenen Gruppen können gleich oder verschieden sein mit

n 1-18

m 3-7

k 0, 1-6

l 1 oder 2 im Fall von x=1 und 1 im Fall x=0

x 0,1

y 1-4

bedeuten, können enthalten sein (DE 9941566). Das Verfahren zur Herstellung der Verbindungen ist dadurch gekennzeichnet, daß ein Alkalisalz der allgemeinen Formel

$$D^{+}\ {}^{-}N(CF_3)_2$$

mit $D^+$ ausgewählt aus der Gruppe der Alkalimetalle in einem polaren organischen Lösungsmittel mit einem Salz der allgemeinen Formel

$$[([R^1(CR^2R^3)_k]_lA_x)_yKt]^{+}\ {}^{-}E$$

wobei

| | |
|---|---|
| Kt, A, $R^1$, $R^2$, $R^3$, k, l, x und y | die oben angegebene Bedeutung haben und |
| $^-E$ | $F^-$, $Cl^-$, $Br^-$, $I^-$, $BF_4^-$, $ClO_4^-$, $AsF_6^-$, $SbF_6^-$ oder $PF_6^-$ |

bedeutet, umgesetzt wird.

Die erfindungsgemäßen Verbindungen können auch in Elektrolyten enthalten sein, die Verbindungen der Formel

$$X\text{-}(CYZ)_m\text{-}SO_2N(CR^1R^2R^3)_2$$

mit

| | |
|---|---|
| X | H, F, Cl, $C_nF_{2n+1}$, $C_nF_{2n-1}$, $(SO_2)_kN(CR^1R^2R^3)_2$ |
| Y | H, F, Cl |
| Z | H, F, Cl |
| $R^1$, $R^2$, $R^3$ | H und/oder Alkyl, Fluoralkyl, Cycloalkyl |
| m | 0-9 und falls X=H, m≠0 |
| n | 1-9 |
| k | 0, falls m=0 und k=1, falls m=1-9 |

enthalten, dagestellt dadurch, daß teil- oder perfluorierte Alkysulfonylfluoride mit Dimethylamin in organischen Lösungsmitteln umgesetzt werden (DE 199 466 73).

Auch Elektrolyte mit Komplexsalzen der allgemeinen Formel (DE 199 51 804)

$$M^{x+}\ [EZ]^{y-}_{x/y}$$

worin bedeuten:

| | |
|---|---|
| x, y | 1,2,3,4,5,6 |
| $M^{x+}$ | ein Metallion |
| E | eine Lewis-Säure, ausgewählt aus der Gruppe $BR^1R^2R^3$, $AlR^1R^2R^3$, $PR^1R^2R^3R^4R^5$, $AsR^1R^2R^3R^4R^5$, $VR^1R^2R^3R^4R^5$, |

$R^1$ bis $R^5$ gleich oder verschieden, gegebenenfalls durch eine Einfach- oder Doppelbildung direkt miteinander verbunden sind, jeweils einzeln oder gemeinsam die Bedeutung

eines Halogens (F, Cl, Br),

eines Alkyl- oder Alkoxyrestes ($C_1$ bis $C_8$) der teilweise oder vollständig durch F, Cl, Br substituiert sein kann,

eines, gegebenenfalls über Sauerstoff gebundenen aromatischen Rings aus der Gruppe Phenyl, Naphthyl, Anthracenyl oder Phenanthrenyl, der unsubstituiert oder ein- bis sechsfach durch Alkyl ($C_1$ bis $C_8$) oder F, Cl, Br substituiert sein kann

eines, gegebenenfalls über Sauerstoff gebundenen aromatischen heterocyclischen Rings aus der Gruppe Pyridyl, Pyrazyl oder Pyrimidyl, der unsubstituiert oder ein- bis vierfach durch Alkyl ($C_1$ bis $C_8$) oder F, Cl, Br substituiert sein kann, haben können und

Z $OR^6$, $NR^6R^7$, $CR^6R^7R^8$, $OSO_2R^6$, $N(SO_2R^6)(SO_2R^7)$, $C(SO_2R^6)(SO_2R^7)(SO_2R^8)$, $OCOR^6$, wobei $R^6$ bis $R^8$ gleich oder verschieden sind, gegebenenfalls durch eine Einfach- oder Doppelbindung direkt miteinander verbunden sind, jeweils einzeln oder gemeinsam die Bedeutung eines Wasserstoffs oder die Bedeutung wie $R^1$ bis $R^5$ haben, hergestellt durch Umsetzung von einem entsprechenden Bor- oder Phosphor-Lewis-Säure-Solvenz-Adukt mit einem Lithium- oder Tetraalkylammonium-Imid, -Methanid oder -Triflat, können verwendet werden.

Auch Boratsalze (DE 199 59 722) der allgemeinen Formel

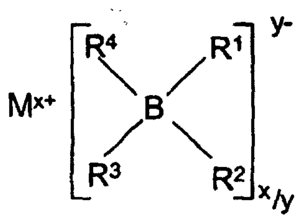

worin bedeuten:

M ein Metallion oder Tetraalkylammoniumion
x,y 1, 2, 3, 4, 5 oder 6
$R^1$ bis $R^4$ gleich oder verschieden, gegebenenfalls durch eine Einfach- oder Doppelbindung direkt miteinander verbundener Alkoxy- oder Carboxyreste ($C_1$-$C_8$) können enthalten sein. Hergestellt werden diese Boratsalze durch Umsetzung von Lithiumtetraalkoholatborat oder einem 1:1 Gemisch aus Lithiumalkoholat mit einem Borsäureester in einem aprotischen Lösungsmittel mit einer geeigneten Hydroxyl- oder Carboxylverbindung im Verhältnis 2:1 oder 4:1.

Auch Additive wie Silanverbindungen der allgemeinen Formel

$$SiR^1R^2R^3R^4$$

mit $R^1$ bis $R^4$ H
$C_yF_{2y+1-z}H_z$
$OC_yF_{2y+1-z}H_z$
$OC(O)C_yF_{2y+1-z}H_z$
$OSO_2C_yF_{2y+1-z}H_z$
und $1 \leq x < 6$
$1 \leq y \leq 8$ und
$0 \leq z \leq 2y+1$
und
$R^1$-$R^4$ gleich oder verschieden
mit der Bedeutung eines aromatischen Rings aus der Gruppe Phenyl, Naphthyl der unsubstituiert oder ein- oder mehrfach durch F, $C_yF_{2y+1-z}H_z$ oder $OC_yF_{2y+1-z}H_z$, $OC(O)C_yF_{2y+1-z}H_z$, $OSO_2C_yF_{2y+1-z}H_z$, $N(C_nF_{2n+1-z}H_z)_2$ substituiert sein kann, oder
mit der Bedeutung eines heterocyclischen aromatischen Rings aus der Gruppe Pyridyl, Pyrazyl oder Pyrimidyl, die jeweils ein- oder mehrfach mit F, $C_yF_{2y+1-z}H_z$ oder $OC_yF_{2y+1-z}H_z$, $OC(O)C_yF_{2y+1-z}H_z$, $OSO_2C_yF_{2y+1-z}H_z$, $N(C_nF_{2n+1-z}H_z)_2$ substituiert sein können (DE 100 276 26), können enthalten sein.

Die erfindungsgemäßen Verbindungen können auch in Elektrolyte eingesetzt werden, die Lithiumfluoralkylphosphate der folgenden Formel enthalten,

$$Li^+[PF_x(C_yF_{2y+1-z}H_z)_{6-x}]^-$$

worin
$1 \leq x \leq 5$
$3 \leq y \leq 8$

$0 \leq z \leq 2y + 1$
bedeuten und die Liganden ($C_yF_{2y+1-z}H_z$) gleich oder verschieden sein können, wobei die Verbindungen der allgemeinen Formel,

$$Li^+[PF_a(CH_bF_c(CF_3)_d)_e]^-$$

in der a eine ganze Zahl von 2 bis 5, b = 0 oder 1, c = 0 oder 1, d = 2 und e eine ganze Zahl von 1 bis 4 bedeuten, mit den Bedingungen, daß b und c nicht gleichzeitig jeweils = 0 bedeuten und die Summe aus a + e gleich 6 ist und die Liganden ($CH_bF_c(CF_3)_d$) gleich oder verschieden sein können, ausgenommen sind (DE 100 089 55). Das Verfahren zur Herstellung von Lithiumfluoralkylphosphaten ist dadurch gekennzeichnet, daß wenigstens eine Verbindung der allgemeinen Formel

$$H_mP(C_nH_{2n+1})_{3-m} \quad \text{(III)},$$

$$OP(C_nH_{2n+1})_3 \quad \text{(IV)},$$

$$Cl_mP(C_nH_{2n+1})_{3-m} \quad \text{(V)},$$

$$F_mP(C_nH_{2n+1})_{3-m} \quad \text{(VI)},$$

$$Cl_oP(C_nH_{2n+1})_{5-o} \quad \text{(VII)},$$

$$F_oP(C_nH_{2n+1})_{5-o} \quad \text{(VIII)},$$

in denen jeweils
$0 < m < 2$, $3 < n < 8$ und $0 < o < 4$ bedeutet
durch Elektrolyse in Fluorwasserstoff fluoriert wird, das so erhaltene Gemisch der Fluorierungsprodukte durch Extraktion, Phasentrennung und/oder Destillation aufgetrennt wird, und das so erhaltene fluorierte Alkylphosphoran in einem aprotischen Lösungsmittel oder Lösungsmittelgemisch unter Feuchtigkeitsausschluß mit Lithiumfluorid umgesetzt wird, und das so erhaltene Salz nach den üblichen Methoden gereinigt und isoliert wird.

Die erfindungsgemäßen Verbindungen können auch in Elektrolyten eingesetzt werden, die Salze der Formel

$$Li[P(OR^1)_a(OR^2)_b(OR^3)_c(OR^4)_dF_e]$$

worin $0 < a+b+c+d \leq 5$ und $a+b+c+d+e=6$ gilt, und $R^1$ bis $R^4$ unabhängig voneinander Alkyl-, Aryl- oder Heteroarylreste sind, wobei mindestens zwei von $R^1$ bis $R^4$ durch eine Einfach- oder Doppelbindung direkt miteinander verbunden sein können, enthalten (DE 100 16 801). Dargestellt werden die Verbindungen durch Umsetzung von Phosphor (V) -Verbindungen der allgemeinen Formel

$$P(OR^1)_a(OR^2)_b(OR^3)_c(OR^4)_dF_e$$

worin $0 < a+b+c+d \leq 5$ und $a+b+c+d+e=5$ gilt, und $R^1$ bis $R^4$ die oben angegebenen Bedeutungen haben mit Lithiumfluorid in Gegenwart eines organischen Lösungsmittels.

Auch Ionische Flüssigkeiten der allgemeinen Formel

$$K^+A^-$$

worin bedeuten:

$K^+$ ein Kation ausgewählt aus der Gruppe

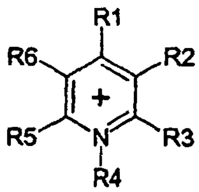

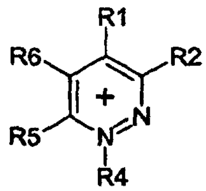

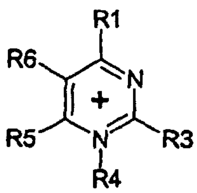

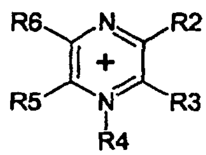

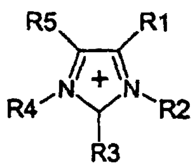

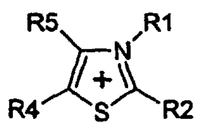

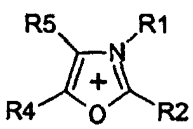

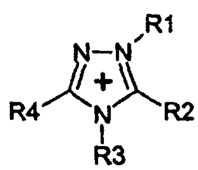

wobei $R^1$ bis $R^5$ gleich oder verschieden, gegebenenfalls durch eine Einfach- oder Doppelbindung direkt miteinander verbunden sind und jeweils einzeln oder gemeinsam folgende Bedeutung haben:

-H,
-Halogen,
-Alkylrest ($C_1$ bis $C_8$) der teilweise oder vollständig durch weitere Gruppen, vorzugsweise F, Cl, $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$ mit $1<n<6$ und $0<x\leq13$ substituiert sein kann und

$A^-$ ein Anion ausgewählt aus der Gruppe

$$[B(OR^1)_n(OR^2)_m(OR^3)_o(OR^4)_p]^-$$

mit $0\leq n, m, o, p\leq4$ und
$m+n+o+p=4$
wobei $R^1$ bis $R^4$ verschieden oder paarweise gleich sind, gegebenenfalls durch eine Einfach- oder Doppelbildung direkt miteinander verbunden sind, jeweils einzeln oder gemeinsam
die Bedeutung eines aromatischen Rings aus der Gruppe Phenyl, Naphthyl, Anthracenyl oder Phenanthrenyl, der unsubstituiert oder ein- oder mehrfach durch $C_nF_{(2n+1-x)}H_x$ mit $1<n<6$ und $0<x\leq13$ oder Halogen (F, Cl, Br) substituiert sein kann, besitzen,

die Bedeutung eines aromatischen heterocyclischen Rings aus der Gruppe Pyridyl, Pyrazyl oder Pyrimidyl, der unsubstituiert oder ein- oder mehrfach durch $C_nF_{(2n+1-x)}H_x$ mit 1<n<6 und 0<x≤13 oder Halogen oder Halogen (F, Cl, Br) substituiert sein kann, besitzen,
die Bedeutung eines Alkylrests ($C_1$ bis $C_8$) der teilweise oder vollständig durch weitere Gruppen, vorzugsweise F, Cl, , $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$ mit 1 <n<6 und 0<x≤13 substituiert sein kann, besitzen,
beziehungsweise $OR^1$ bis $OR^4$
einzeln oder gemeinsam die Bedeutung eines aromatischen oder aliphatischen Carboxyl-, Dicarboxyl-, Oxysulfonyl- oder Oxycarboxylrests, der teilweise oder vollständig durch weitere Gruppen, vorzugsweise F, Cl, , $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$ mit 1<n<6 und 0<x≤13 substituiert sein kann, besitzen (DE 100 265 65), können im Elektrolyten enthalten sein. Auch Ionische Flüssigkeiten $K^+A^-$ mit $K^+$ definiert wie oben und

$A^-$ ein Anion ausgewählt aus der Gruppe

$$\left[ PF_x(C_yF_{2y+1-z}H_z)_{6-x} \right]^-$$

und 1≤ x < 6
1≤ y ≤ 8 und
0≤ z ≤ 2y+1
können enthalten sein (DE 100 279 95).

Die erfindungsgemäßen Verbindungen können auch in Elektrolyten enthalten sein mit Verbindungen folgender Formel:

$$NR^1R^2R^3$$

worin

$R^1$ und $R^2$ H, $C_yF_{2y+1-z}H_z$ oder $(C_nF_{2n-m}H_m)X$, wobei X ein aromatischer oder heterozyklischer Rest ist, bedeuten und

$R^3$ $(C_nF_{2n-m}H_m)Y$, wobei Y ein heterozyklischer Rest ist, oder
$(C_oF_{2o-p}H_p)Z$, wobei Z ein aromatischer Rest ist, bedeutet,
und wobei n, m, o, p, y und z die folgenden Bedingungen erfüllen:
0 ≤ n ≤ 6,
0 ≤ m ≤ 2n,
2 ≤ o ≤ 6,
0 ≤ p ≤ 2o,
1 ≤ y ≤ 8 und
0 ≤ z ≤ 2y+1,
zur Verringerung des Säuregehalts in aprotischen Elektrolytsystemen in elektrochemischen Zellen.

Auch Fluoralkylphosphate der allgemeinen Formel

$$M^{n+}[PF_x(C_yF_{2y+1-z}H_z)_{6-x}]_n^-$$

worin
1 ≤ x ≤ 6
1 ≤ y ≤ 8
0 ≤ z ≤ 2y + 1
1 ≤ n ≤ 3 und
$M^{n+}$ die Bedeutung eines ein- bis dreiwertigen Kations besitzt, insbesondere:
$NR^1R^2R^3R^4$,

$PR^1R^2R^3R^4$,
$P[(NR^1R^2)_kR^3_mR^4_{4-k-m}]$ (mit k=1-4, m=0-3 und k+m≤4),
$C(NR^1R^2)(NR^3R^4)(NR^5R^6)$,
$C(Aryl)_3$, Rb oder Tropylium

mit $R^1$ bis $R^8$ H, Alkyl und Aryl ($C_1$-$C_8$) die teilweise durch F, Cl oder Br substituiert sein können,

wobei $M^{n+} = Li^+, Na^+, Cs^+, K^+$ und $Ag^+$ ausgenommen sind, können enthalten sein. Diese Fluoralkylphosphate sind erhältlich indem Phosphorane mit einem Fluorid oder Metallfluoralkylphosphate mit einem Fluorid oder Chlorid in organischen aprotischen Lösungsmitteln umgesetzt werden (DE 100 388 58).

Der Elektrolyt kann auch ein Gemisch enthalten, daß

a) wenigstens ein Lithiumfluoroalkylphosphat-Salz der allgemeinen Formel

$$Li^+ [PF_x(C_yF_{2y+1-z}H_z)_{6-x}]^-$$

worin
$1 \leq x \leq 5$
$1 \leq y \leq 8$ und
$0 \leq z \leq 2y + 1$
bedeuten und die Liganden ($C_yF_{2y+1-z}H_z$) jeweils gleich oder verschieden sind und
b) wenigstens ein Polymeres (DE 100 58 264) enthält.

Im Elektrolyten können auch Tetrakisfluoroalkylborat-Salze der allgemeinen Formel

$$M^{n+} ([BR_4]^-)_n$$

worin
$M^{n+}$ ein einwertiges, zweiwertiges oder dreiwertiges Kation ist,
die Liganden R jeweils gleich sind und für ($C_xF_{2x+1}$) mit $1 \leq x \leq 8$ stehen und n = 1, 2 oder 3 ist (DE 100 558 11) enthalten sein. Das Verfahren zur Herstellung von Tetrakisfluoroalkylborat-Salzen ist dadurch gekennzeichnet, daß wenigstens eine Verbindung der allgemeinen Formel $M^{n+} ([B(CN)_4]^-)_n$ worin $M^{n+}$ und n die oben angegebene Bedeutung haben, durch Umsetzung mit wenigstens einem Fluorierungsmittel in wenigstens einem Lösungsmittel fluoriert und die so erhaltene fluorierte Verbindung nach den üblichen Methoden gereinigt und isoliert wird.

Der Elektrolyt kann auch Boratsalze der allgemeinen Formel

$$M^{n+} [BF_x(C_yF_{2y+1-z}H_z)_{4-x}]_n^-$$

enthalten, worin bedeuten:
$1<x<3$, $1 \leq y \leq 8$ und $0 \leq z \leq 2y+1$ und

M ein- bis dreiwertiges Kation ($1 \leq n \leq 3$), außer Kalium und Barium, insbesondere:

Li,
$NR^1R^2R^3R^4$, $PR^5R^6R^7R^8$, $P[(NR^5R^6)_kR^7_mR^8_{4-k-m}]$ (mit k=1-4, m=0-3 und k+m≤4) oder
$C(NR^5R^6)(NR^7R^8)(NR^9R^{10})$, wobei

$R^1$ bis $R^4$ $C_yF_{2y+1-z}H_z$ und
$R^5$ bis $R^{10}$ H oder $C_yF_{2y+1-z}H_z$ oder

ein aromatisches heterozyklisches Kation, insbesondere Stickstoff- und/oder Sauerstoff- und/oder Schwefelhaltige aromatische heterozyklische Kationen (DE 101 031 89). Das Verfahren zur Herstellung dieser Verbindungen ist dadurch gekennzeichnet, daß

a) $BF_3$-Lösungsmittel-Komplexe 1:1 mit Alkyllithium unter Kühlung umgesetzt werden, nach langsamer Erwärmung

das Lösungsmittel zu einem Großteil entfernt und anschließend der Feststoff abfiltriert und mit einem geeigneten Lösungsmittel gewaschen wird, oder

b) Lithiumsalze in einem geeigneten Lösungsmittel 1:1 mit $B(CF_3)F_3$-salzen umgesetzt werden, bei erhöhter Temperatur gerührt und nach Entfernen des Lösungsmittels das Reaktionsgemisch mit aprotischen nichtwäßrigen Lösungsmitteln, vorzugsweise mit Lösungsmitteln die in elektrochemischen Zellen verwendet werden, versetzt und getrocknet wird, oder

c) $B(CF_3)F_3$-salze 1:1 bis 1:1,5 mit Lithiumsalzen in Wasser bei erhöhter Temperatur umgesetzt und 0,5 bis 2 Stunden am Siedepunkt erhitzt werden, das Wasser entfernt und das Reaktionsgemisch mit aprotischen nichtwäßrigen Lösungsmitteln, vorzugsweise mit Lösungsmitteln die in elektrochemischen Zellen verwendet werden, versetzt getrocknet wird.

Im Elektrolyten können auch Fluoroalkylphosphat-Salze der allgemeinen Formel

$$M^{n+}\ ([PF_x(C_yF_{2y+1-z}H_z)_{6-x}]^-)_n$$

enthalten sein, worin
$M^{n+}$ ein einwertiges, zweiwertiges oder dreiwertiges Kation ist,
$1 \leq x \leq 5$,
$1 \leq y \leq 8$ und
$0 \leq z \leq 2y + 1$ sind, n = 1, 2 oder 3 bedeuten und die Liganden $(C_yF_{2y+1-z}H_z)$ jeweils gleich oder verschieden sind, wobei die Fluoroalkylphosphat-Salze, in denen $M^{n+}$ ein Lithium-Kation ist, sowie die Salze
$M^+([PF_4(CF_3)_2]^-)$ mit $M^+ = Cs^+$, $Ag^+$ oder $K^+$,
$M^+([PF_4(C_2F_5)_2]^-)$ mit $M^+ = Cs^+$,
$M^+([PF_3(C_2F_5)_3]^-)$ mit $M^+ = Cs^+$, $K^+$, $Na^+$ oder para-$Cl(C_6H_4)N_2^+$,
$M^+([PF_3(C_3F_7)_3]^-)$ mit $M^+ = Cs^+$, $K^+$, $Na^+$, para-$Cl(C_6H_4)N_2^+$ oder para-$O_2N(C_6H_4)N_2^+$, ausgenommen sind (DE 100 558 12). Das Verfahren zur Herstellung dieser Fluoroalkylphosphat-Salze ist dadurch gekennzeichnet, daß wenigstens eine Verbindung der allgemeinen Formel

$$H_rP(C_sH_{2s+1})_{3-r},$$

$$OP(C_sH_{2s+1})_3,$$

$$Cl_rP(C_sH_{2s+1})_{3-r},$$

$$F_rP(C_sH_{2s+1})_{3-r},$$

$$Cl_tP(C_sH_{2s+1})_{5-t}$$

und/oder

$$F_tP(C_sH_{2s+1})_{5-t},$$

in denen jeweils
$0 \leq r \leq 2$
$3 \leq s \leq 8$ und
$0 \leq t \leq 4$
bedeuten, durch Elektrolyse in Fluorwasserstoff fluoriert wird, das so erhaltene Gemisch der Fluorierungsprodukte aufgetrennt wird und das so erhaltene fluorierte Alkylphosphoran in einem aprotischen Lösungsmittel oder Lösungsmittelgemisch unter Feuchtigkeitsausschluß mit einer Verbindung der allgemeinen Formel $M^{n+}(F^-)_n$ worin $M^{n+}$ und n die oben angegebene Bedeutung haben, umgesetzt wird, und das so erhaltene Fluoroalkylphosphat-Salz nach den üblichen Methoden gereinigt und isoliert wird.

Die erfindungsgemäßen Verbindungen können in Elektrolyte für elektrochemische Zellen eingesetzt werden, die Anodenmaterial, bestehend aus beschichteten Metallkernen, ausgewählt aus der Gruppe Sb, Bi, Cd, In, Pb, Ga und Zinn oder deren Legierungen, enthalten (DE 100 16 024). Das Verfahren zur Herstellung dieses Anodenmaterials ist dadurch gekennzeichnet, daß

a) eine Suspension oder ein Sol des Metall- oder Legierungskerns in Urotropin hergestellt wird,
b) die Suspension mit Kohlenwasserstoffen mit $C_5$-$C_{12}$ emulgiert werden,
c) die Emulsion auf die Metall- oder Legierungskerne aufgefällt werden und
d) durch Temperung des Systems die Metallhydroxide bzw. -oxihydroxide in das entsprechende Oxid übergeführt werden.

Die erfindungsgemäßen Verbindungen können auch in Elektrolyte für elektrochemische Zellen eingesetzt werden, mit Kathoden aus gängigen Lithium-Interkalations und Insertionsverbindungen aber auch mit Kathodenmaterialien, die aus Lithium-Mischoxid-Partikel bestehen, die mit einem oder mehreren Metalloxiden (DE 199 22 522) beschichtet sind. Sie können auch aus Lithium-Mischoxid-Partikel bestehen, die mit einem oder mehreren Polymeren (DE 199 46 066) beschichtet sind, erhalten durch ein Verfahren, bei dem die Partikel in einem Lösungsmittel suspendiert werden und anschließend die beschichteten Partikel abfiltriert, getrocknet und gegebenenfalls calciniert werden. Ebenso können die erfindungsgemäßen Verbindungen in Systemen mit Kathoden eingesetzt werden, die aus Lithium-Mischoxid-Partikeln bestehen, die mit Alkalimetallverbindungen und Metalloxiden ein- oder mehrfach beschichtet sind (DE 100 14 884). Das Verfahren zur Herstellung dieser Materialien ist dadurch gekennzeichnet, daß die Partikel in einem organischen Lösungsmittel suspendiert werden, eine Alkalimetallsalzverbindung suspendiert in einem organischen Lösungsmittel zugegeben wird, Metalloxide gelöst in einem organischen Lösungsmittel zugegeben werden, die Suspension mit einer Hydrolyselösung versetzt wird und anschließend die beschichteten Partikel abfiltriert, getrocknet und calciniert werden. Ebenso können die erfindungsgemäßen Verbindungen in Systemen eingesetzt werden, die Anodenmaterialien mit dotiertem Zinnoxid enthalten (DE 100 257 61). Dieses Anodenmaterial wird hergestellt indem

a) eine Zinnchlorid-Lösung mit Harnstoff versetzt wird,
b) die Lösung mit Urotropin und einer geeigneten Dotierverbindung versetzt wird,
c) das so erhaltene Sol in Petrolether emulgiert wird,
d) das erhaltene Gel gewaschen und das Lösungsmittel abgesaugt sowie
e) das Gel getrocknet und getempert wird.

Ebenso können die erfindungsgemäßen Verbindungen in Systemen eingesetzt werden, die Anodenmaterialien mit reduziertem Zinnoxid enthalten (DE 100 257 62). Dieses Anodenmaterial wird hergestellt indem

a) eine Zinnchlorid-Lösung mit Harnstoff versetzt wird,
b) die Lösung mit Urotropin versetzt wird,
c) das so erhaltene Sol in Petrolether emulgiert wird,
d) das erhaltene Gel gewaschen und das Lösungsmittel abgesaugt wird,
e) das Gel getrocknet und getempert wird und
f) das erhaltene $SnO_2$ in einem begasbaren Ofen einem reduzie-rendem Gasstrom ausgesetzt wird.

Im folgenden wird die Erfindung anhand von Beispielen erläutert. Diese Beispiele dienen lediglich der Erläuterung der Erfindung und schränken den allgemeinen Erfindungsgedanken nicht ein.

**Beispiele**

Beispiel 1:

Synthese von Di-lithium-perfluoro-1,2-bis(diethyltrifluorophosphato)ethan

Zu 0,44 g (16,9 mmol) LiF in einem PFA Gefäß wurden unter Trockengasatmosphäre 9,50 g einer Lösungsmittelmischung (Ethylencarbonat : Dimethylcarbonat : Diethylcarbonat = 2 : 2 : 1 Gewichtsverhältnis) und 3,50 g (4,9 mmol) Perfluoro-1,2-bis(diethyldifluoro-phosphorano)ethan bei Raumtemperatur hinzugefügt. Die Reaktionsmischung wurde bei Raumtemperatur drei Stunden gerührt bis die gesamte Menge an Perfluoro-1,2-bis(diethyldifluoro-phosphorano)ethan (Bodensatz) aufgelöst war. Der Überschuß LiF wurde abfiltriert und die Lösung (Elektrolyt), die 3,75 g Dilithium-perfluoro-1,2-bis(diethyltrifluorophosphato)ethan (entsprechend einer Salzkonzentration in der Elektrolytlösung von 28,3 % oder 0,48 Mol/l) enthielt durch NMR $^{19}F$ und $^{31}P$ Spektren untersucht. Die Spektren wurden hierzu

für saubere Elektrolyte in einer FEP-Röhre ohne Verdünnung mit einem anderen Lösungsmittel unter Verwendung einer speziellen Technik ($CD_3COCD_3$ Film) gemessen. $CCl_3F$ diente als externe Referenz in dem Film. Die Frequenz von 566,22 Hz von 85% $H_3PO_4$ in Wasser als $^{31}P$ Referenz in Aceton-$D_6$ wurde separat experimentell bestimmt. Beide NMR $^{19}F$ und $^{31}P$ Spektren wurden mit einem Bruker DRX 500 Spektrometer (470,6 MHz für $^{19}F$ und 202,5 MHz für $^{31}P$) gemessen.

Die NMR $^{19}F$ und $^{31}P$ Spektren zeigen die Bildung unterschiedlicher Stereoisomere des Salzes Di-lithium-pertluoro-1,2-bis(diethyltrifluorophosphato)ethan durch die Reaktion des Fluorid-Ions mit dem Phosphoratom zwischen Perfluorethylgruppen oder zwischen Perfluorethylgruppe und Perfluorethylen-brücke im Ausgangsmolekül Perfluoro-1,2-bis(diethyldifluorophosphorano)ethan.

$2\ Li^+[(C_2F_5)_2PF_3(CF_2)_2PF_3(C_2F_5)_2]^{2-}$

Isomer A (ca. 67 %)

<u>NMR $^{19}F$:</u> -46,19 dm (2 F, 2 PF); -87,57 dm (4 F, 2 $PF_2$); -82,28 m (6 F, 2 $CF_3$); -82,42 m (6 F, 2 $CF_3$); -112,00 dm (4 F, 2 $CF_2$); -115,13 dm (4 F, 2 $CF_2$); -116,25 dm (4 F, 2 $CF_2$); $J^1_{P,F}$ = 927 Hz; $J^1_{P,F}$ = 922 Hz; $J^2_{P,F}$ = 105 Hz; $J^2_{P,F}$ = 74 Hz; $J^2_{P,F}$ = 77 Hz.

<u>NMR $^{31}P$:</u> -144,7 qm

Isomer B (ca. 33 %)

<u>NMR $^{19}F$:</u> -43,39 dm (2 F, 2 PF); -87,73 dm (4 F, 2 $PF_2$); -80,39 m (12 F, 4 $CF_3$); -110,55 dm (4 F, 2 $CF_2$); -115,70 dm (8 F, 4 $CF_2$); $J^1_{P,F}$ = 860 Hz; $J^1_{P,F}$ = 930 Hz.

<u>NMR $^{31}P$:</u> -144,8 qm

<u>Beispiel 2:</u>

Synthese eines Gemisches aus Di-Lithium Perfluoro-1,2-bis(diethyltrifluorophosphato)ethan und Lithium Tris(pentafluoroethyl)trifluorophosphat

Zu 0,46 g (17,7 mmol) LiF in einem PFA Gefäß wurden unter Trockengasatmosphäre 9,27 g einer Lösungsmittelmischung (Ethylencarbonat : Dimethylcarbonat : Diethylcarbonat = 2 : 2 : 1 Gewichtsverhältnis) und 3,39 g eines Gemisches aus Perfluoro-1,2-bis(diethyldifluorophosphorano)ethan (ca. 60 Mol%) und Tris(pentafluoroethyl)difluorophosphoran (ca. 40 Mol%) [Dieses Gemisch wurde durch die elektrochemische Fluorierung von 1,2-Bis(diethylphosphino)ethan hergestellt und ohne Trennung weiterverwendet] bei Raumtemperatur hinzugefügt. Die Reaktionsmischung wurde bei Raumtemperatur drei Stunden gerührt bis die gesamte Menge des perfluorierten Edukts (Bodensatz) aufgelöst war. Der Überschuß LiF wurde abfiltriert und die Lösung (Elektrolyt), die 2,60 g Di-lithium-perfluoro-1,2-bis (diethyltrifluorophosphato)ethan (entsprechend einer Salzkonzentration in der Elektrolytlösung von 0,34 Mol/l) und 1,02 g Lithium tris(pentafluoroethyl)trifluorophosphat (entsprechend einer Salzkonzentration in der Elektrolytlösung von 0,23 Mol/l) enthielt durch NMR $^{19}F$ und $^{31}P$ Spektren untersucht. Die Gesamtkonzentration des Salzes in der Elektrolytlösung betrug 28,1 %. Die Spektren wurden hierzu wie unter Beispiel 1 aufgeführt gemessen und belegen die Anwesenheit beider Salze in der Lösung.

$2\ Li^+[(C_2F_5)_2PF_3(CF_2)_2PF_3(C_2F_5)_2]^{-2}$ (ca. 60 mol %)

<u>NMR $^{31}P$:</u> -144,7 qm

$Li^+[(C_2F_5)_3PF_3]^-$

<u>NMR $^{31}P$:</u> -150,3 qm

<u>Beispiel 3:</u>

Synthese von Di(tetraethylammonium)perfluoro-1,2-bis(diethyltrifluorophosphato)ethan

Die Synthese von Di(tetraethytammonium)perfluoro-1,2-bis(diethyltrifluorophosphato)-ethan erfolgte analog

zur in Beispiel 1 aufgeführten Synthese, wobei anstatt LiF wasserfreies Tetraethylammoniumfluorid verwendet wird. $^{19}F$ und $^{31}P$ Spektren NMR-Untersuchungen zeigen ausschließlich Signale, die dem Anion zugeordnet werden können (siehe Beispiel 1).

Beispiel 4

Oxidationsstabilität des Perfluoro-1,2-bis(diethyltrifluorophosphato)ethan-Anions

In einer Meßzelle mit Platinarbeitselektrode, Lithiumgegenelektrode und Lithiumreferenzelektrode wurden jeweils 5 Zyklovoltammogramme hintereinander aufgenommen. Hierzu wurde ausgehend vom Ruhepotential das Potential zuerst mit einer Vorschubgeschwindigkeit von 10 mV/s auf 6 V gegen $Li/Li^+$ erhöht und im weiteren Verlauf zurück auf das Ruhepotential gefahren.
Elektrolyt: 0,5 mol/kgLm Dilithium perfluoro-1,2-bis(diethyltrifluorophosphato)-ethan in EC/DMC (1:1, Ethylencarbonat/Dimethylcarbonat). Das Oxidationspotential konnte zu >5 V gegen $Li/Li^+$ bestimmt werden (siehe hierzu Abbildung 1).

## Zeichnungen

Abbildung 1

Die Abbildung 1 gibt die Ergebnisse der in Beispiel 4 genannten Messzelle wieder, mit der Zyklovoltammogramme unter den in diesem Beispiel genannten Bedingungen mit Di-Lithium perfluoro-1,2-bis(diethyltrifluorophosphato)ethan als Leitsalz aufgenommen wurden.

## Patentansprüche

1. Fluoralkylphosphat-Salze der allgemeinen Formel (I),

$$(M^{a+})_b[(C_nF_{2n+1-m}H_m)_yPF_{5-y}(CR_1R_2)_xPF_{5-y}(C_nF_{2n+1-m}H_m)_y]^{(2-)}\ (a\cdot b\ /\ 2) \quad (I)$$

worin
$M^{a+}$ ein einwertiges, zweiwertiges oder dreiwertiges Kation,
a = 1, 2 oder 3,
b = 2 für a = 1,
b = 2 für a = 3,
b = 1 für a = 2
und jeweils
$1 \leq n \leq 8$,
$0 \leq m \leq 2$ für n = 1 oder 2,
$0 \leq m \leq 4$ für $3 \leq n \leq 8$,
$1 \leq x \leq 12$,
$0 \leq y \leq 2$,
wobei $R_1$ und $R_2$ jeweils identisch oder unterschiedlich sind und ausgewählt sind aus der Gruppe der Fluor-, Wasserstoff-, Alkyl-, Fluoralkyl und Perfluoralkylsubstituenten und,
wobei jeweils die Substituenten $(C_nF_{2n+1-m}H_m)$ identisch oder unterschiedlich sind
und die Verbindungen mit $M^{a+}=K^+$, $R_1$ und $R_2$=H und y=0 ausgenommen sind.

2. Fluoralkylphosphat-Salze gemäß Anspruch 1, **dadurch gekennzeichnet, daß** das Kation $M^{a+}$ ein Alkalimetall-Kation, vorzugsweise ein Lithium-, Natrium- oder Kalium-Kation, besonders bevorzugt ein Lithium-Kation ist.

3. Fluoralkylphosphat-Salze gemäß Anspruch 1, **dadurch gekennzeichnet, daß** das Kation $M^{a+}$ ein Magnesium- oder Aluminium-Kation ist.

4. Fluoralkylphosphat-Salze gemäß Anspruch 1, **dadurch gekennzeichnet, daß** $M^{a+}$ ein organisches Kation, vorzugsweise
ein Nitrosyl-Kation, ein Nitryl-Kation oder ein organisches Kation mit der allgemeinen Formel $[N(R^7)_4]^+$, $[P(R^7)_4]^+$,

$[P(N(R^7)_2)_4]^+$ oder $[C(N(R^7)_2)_3]^+$ ist, wobei die Reste $R^7$, jeweils gleich oder verschieden, für H, Alkyl ($C_{1-10}$) oder A stehen,
wobei gegebenenfalls H-Atome der Alkylkette durch Fluor oder einen gegebenenfalls Heteroatome aufweisenden aromatischen Rest oder einen vorzugsweise 5-6 gliedrigen Cycloalkylrest substituiert sein können, und/oder C-Atome der Alkylkette durch Heteroatome, vorzugsweise Sauerstoff, ausgetauscht sein können.

**5.** Fluoralkylphosphat-Salze gemäß Anspruch 4, **dadurch gekennzeichnet, daß** A jeweils einen 5- oder 6-gliedrigen, gegebenenfalls Stickstoff- und/oder Schwefel- und/oder Sauerstoffatome aufweisenden aromatischen Rest oder einen vorzugsweise 5- oder 6-gliedrigen Cycloalkyl-Rest, vorzugsweise einen Phenyl-Rest oder Pyridin-Rest bedeutet.

**6.** Fluoralkylphosphat-Salze gemäß Anspruch 1, **dadurch gekennzeichnet, daß** $M^{a+}$ ein heteroaromatisches Kation der allgemeinen Formel (II) bis (IX)

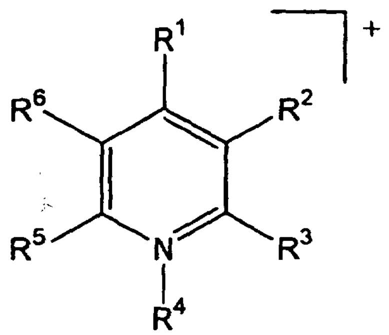

(II)

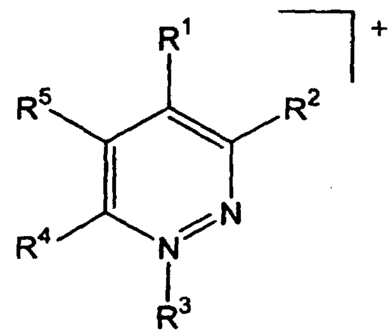

(III)

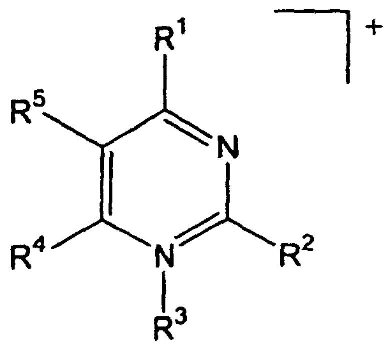

(IV)

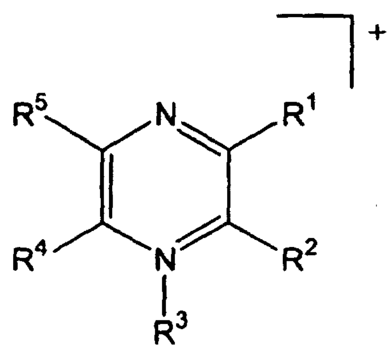

(V)

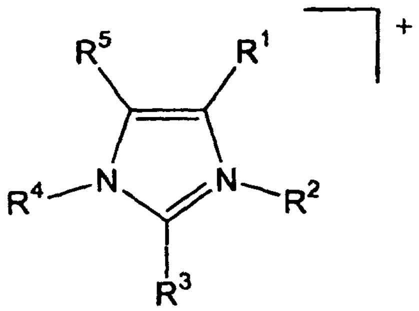

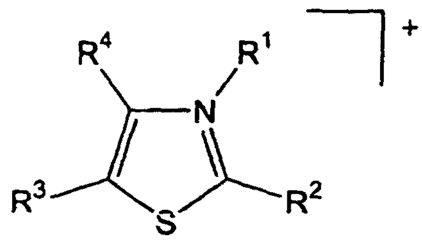

(VI) (VII)

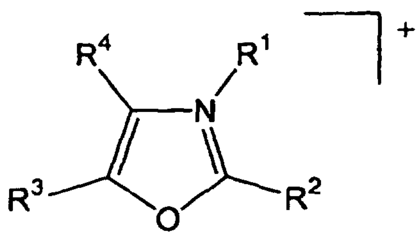

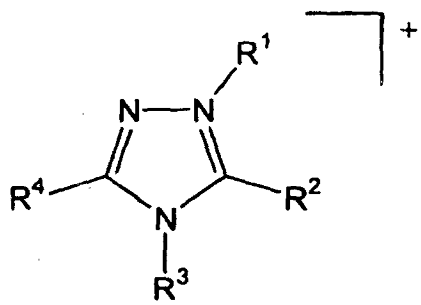

(VIII) (IX)

ist, worin die Reste $R^1$ bis $R^6$, jeweils gleich oder verschieden, ggf. auch zwei der Reste $R^1$ bis $R^6$ gemeinsam, einen H-Rest, einen Halogen-Rest, vorzugsweise einen Fluor-Rest, oder einen $C_{1-8}$-Alkyl-Rest bedeuten, der gegebenenfalls mit
F, Cl, $N(C_rF_{(2r+1-s)}H_s)_2$, $O(C_rF_{(2r+1-s)}H_s)$, $SO_2(C_rF_{(2r+1-s)}H_s)$ oder $C_rF_{(2r+1-s)}H_s$ substituiert sein kann, worin $1 \leq r \leq 6$ und $0 \leq s \leq 2r+1$ bedeuten,
wobei die Reste $R^1$ bis $R^6$ keine Halogene sein können, wenn die Reste $R^1$ bis $R^6$ direkt an Stickstoff gebunden sind.

**7.** Fluoralkylphosphat-Salze gemäß einem der Ansprüche 1 bis 6, **dadurch gekennzeichnet, daß** $1 \leq n \leq 6$, vorzugsweise $1 \leq n \leq 3$ ist.

**8.** Fluoralkylphosphat-Salze gemäß einem der Ansprüche 1 bis 7, **dadurch gekennzeichnet, daß** $1 \leq x \leq 8$, vorzugsweise $1 \leq x \leq 4$ ist.

**9.** Fluoralkylphosphat-Salze gemäß einem der Ansprüche 1 bis 8, **dadurch gekennzeichnet, daß** m = 0.

**10.** Fluoralkylphosphat-Salze gemäß einem der Ansprüche 1 bis 9, **dadurch gekennzeichnet, daß** y = 2.

**11.** Fluoralkylphosphat-Salze gemäß einem der Ansprüche 1 bis 10, **dadurch gekennzeichnet, daß** $R_1$ und $R_2$ = Fluor sind.

**12.** Fluoralkylphosphat-Salze gemäß Anspruch 1:

$$(Li^+)_2[(C_2F_5)_2PF_3(CF_2)_2PF_3(C_2F_5)_2]^{(2-)}$$

und

$$(N(C_2H_5)_4{}^{+})_2[(C_2F_5)_2PF_3(CF_2)_2PF_3(C_2F_5)_2]^{(2-)}$$

**13.** Verfahren zur Herstellung von Fluoralkylphosphat-Salzen gemäß einem der Ansprüche 1 bis 12, **dadurch gekennzeichnet, daß** wenigstens ein Fluoro-α,ω-bis[(fluoralkyl)fluorophosphorano]alkan mit wenigstens einem Fluorid-Salz der allgemeinen Formel (X),

$$(M^{a+})\ [F^{-}]_a \qquad (X)$$

worin ($M^{a+}$) und a die Bedeutung gemäß den Ansprüchen 1 bis 12 haben, in Lösung zu einem Fluoralkylphosphat-Salz der allgemeinen Formel (I) gemäß Anspruch 1 umgesetzt und dieses gegebenenfalls nach üblichen Methoden gereinigt und/oder isoliert wird.

**14.** Verfahren nach Anspruch 13, **dadurch gekennzeichnet, daß** als Fluoro-α,ω-bis[(fluoralkyl)fluorophosphorano]alkan wenigstens eine Verbindung der allgemeinen Formel (XI),

$$(C_nF_{2n+1-m}H_m)_yPF_{4-y}(CR_1R_2)_xPF_{4-y}(C_nF_{2n+1-m}H_m)_y \qquad (XI)$$

worin
$1 \leq n \leq 8$, $0 \leq m \leq 2$ für n = 1 oder 2, $0 \leq m \leq 4$ für $3 \leq n \leq 8$, $1 \leq x \leq 12$, $0 \leq y \leq 2$,
wobei $R_1$ und $R_2$ identisch oder unterschiedlich sind und ausgewählt sind aus der Gruppe der Fluor-, Wasserstoff-, Alkyl-, Fluoralkyl und Perfluoralkylsubstituenten, und
wobei jeweils die Substituenten ($C_nF_{2n+1-m}H_m$) identisch oder unterschiedlich sind,
eingesetzt wird.

**15.** Verfahren gemäß Anspruch 13 oder 14, **dadurch gekennzeichnet, daß** die Verbindung der allgemeinen Formel (X) gemäß Anspruch 13 in einem bis zu 10fachen, vorzugsweise bis zu einem 5fachen, besonders bevorzugt in einem bis zu 2fachen Überschuß, bezogen auf die Menge an Fluoro-α,ω-bis[(fluoralkyl)fluorophosphorano]alkan(en), eingesetzt wird.

**16.** Verfahren gemäß einem der Ansprüche 13 bis 15, **dadurch gekennzeichnet, daß** die Umsetzung mit der Verbindung der allgemeinen Formel (X) gemäß Anspruch 13 bei einer Temperatur von -35 bis +80 °C, vorzugsweise -20 bis +50 °C, besonders bevorzugt bei -10 bis 25 °C erfolgt.

**17.** Verfahren nach einem der Ansprüche 13 bis 16, **dadurch gekennzeichnet, daß** als Lösungsmittel organische Carbonate, vorzugsweise Ethylencarbonat, Propylencarbonat, Butylencarbonat, Dimethylcarbonat, Diethylcarbonat, Ethylmethylcarbonat oder Methylpropylcarbonat, organische Ester, vorzugsweise Methylformiat, Ethylformiat, Methylacetat, Ethylacetat, Methylpropionat, Ethylpropionat, Methylbutyrat, Ethylbutyrat, γ-Butyrolacton, organische Ether, vorzugsweise Diethylether, Dimethoxyethan, Diethoxyethan, organische Amide, vorzugsweise Dimethylformamid oder Dimethylacetamid, schwefelhaltige Lösungsmittel, vorzugsweise Dimethylsulfoxid, Dimethylsulfid, Diethylsulfid oder Propansulfon, aprotische Lösungsmittel, vorzugsweise Acetonitril, Acrylnitril, Propionitril oder Aceton, oder zumindest teilweise fluorierte Derivate der vorstehend genannten Lösungsmittel oder Gemische aus wenigstens zwei dieser Lösungsmittel und/oder fluorierten Derivaten dieser Lösungsmittel eingesetzt wird.

**18.** Gemisch enthaltend

a) wenigstens ein Fluoralkylphosphat-Salz der allgemeinen Formel (I) gemäß den Ansprüchen 1 bis 12 und

b) wenigstens ein Polymeres.

**19.** Gemisch gemäß Anspruch 18 **dadurch gekennzeichnet, daß** es 5 bis 90 Gew.-% der Komponente a) und 95 bis 5 Gew.-% der Komponente b), vorzugsweise 10 bis 80 Gew.-% der Komponente a) und 90 bis 20 Gew.-% der Komponente b), jeweils bezogen auf die Summe der Komponenten a) und b), enthält.

20. Gemisch gemäß Anspruch 18 oder 19, **dadurch gekennzeichnet, daß** die Komponente b) ein Homopolymeres oder Copolymeres von Acrylnitril, Vinylidendifluorid, Methylmethacrylat, Tetrahydrofuran, Ethylenoxid, Siloxan, Phosphazen oder eine Mischung aus wenigstens zwei der vorstehend genannten Homopolymeren und/oder Copolymeren ist.

21. Gemisch gemäß Anspruch 20, **dadurch gekennzeichnet, daß** die Komponente b) ein Homopolymeres oder Copolymeres von Vinylidendifluorid, Acrylnitril, Methylmethacrylat, Tetrahydrofuran, vorzugsweise ein Homopolymeres oder Copolymeres von Vinylidendifluorid ist.

22. Gemisch gemäß einem der Ansprüche 18 bis 21, **dadurch gekennzeichnet, daß** das Polymere zumindest teilweise vernetzt ist.

23. Gemisch gemäß einem der Ansprüche 18 bis 22, **dadurch gekennzeichnet, daß** es zusätzlich wenigstens ein Lösungsmittel enthält.

24. Gemisch gemäß Anspruch 23, **dadurch gekennzeichnet, daß** als Lösungsmittel organische Carbonate, vorzugsweise Ethylencarbonat, Propylencarbonat, Butylencarbonat, Dimethylcarbonat, Diethylcarbonat, Ethylmethylcarbonat oder Methylpropylcarbonat, organische Ester, vorzugsweise Methylformiat, Ethylformiat, Methylacetat, Ethylacetat, Methylpropionat, Ethylpropionat, Methylbutyrat, Ethylbutyrat, γ-Butyrolacton, organische Ether, vorzugsweise Diethylether, Dimethoxyethan, Diethoxyethan, organische Amide, vorzugsweise Dimethylformamid oder Dimethylacetamid, schwefelhaltige Lösungsmittel, vorzugsweise Dimethylsulfoxid, Dimethylsulfid, Diethylsulfid oder Propansulfon, aprotische Lösungsmittel, vorzugsweise Acetonitril, Acrylnitril oder Aceton, oder zumindest teilweise fluorierte Derivate der vorstehend genannten Lösungsmittel oder Gemische aus wenigstens zwei dieser Lösungsmittel und/oder fluorierten Derivaten dieser Lösungsmittel vorliegen.

25. Verwendung wenigstens eines Fluoralkylphosphat-Salzes gemäß einem der Ansprüche 1 bis 12 oder wenigstens eines Gemisches gemäß einem der Ansprüche 18 bis 24 in Elektrolyten, primären Batterien, sekundären Batterien, Kondensatoren, Superkondensatoren oder galvanischen Zellen, gegebenenfalls auch in Kombination mit weiteren Leitsalzen und/oder Zusatzstoffen.

26. Elektrolyte enthaltend wenigstens ein Fluoralkylphosphat-Salz gemäß einem der Ansprüche 1 bis 12 oder wenigstens ein Gemisch gemäß einem der Ansprüche 18 bis 24.

27. Elektrolyte gemäß Anspruch 26, **dadurch gekennzeichnet, daß** die Konzentration des/der Fluoralkylphosphat-Salze(s) in dem Elektrolyten 0,01 bis 3 mol/l, vorzugsweise 0,01 bis 2 mol/l, besonders bevorzugt 0,1 bis 1,5 mol/l beträgt.

28. Primäre Batterien enthaltend wenigstens ein Fluoralkylphosphat-Salzes gemäß einem der Ansprüche 1 bis 12 oder wenigstens ein Gemisch gemäß einem der Ansprüche 18 bis 24.

29. Sekundäre Batterien enthaltend wenigstens ein Fluoralkylphosphat-Salz gemäß einem der Ansprüche 1 bis 12 oder wenigstens ein Gemisch gemäß einem der Ansprüche 18 bis 24.

30. Kondensatoren enthaltend wenigstens ein Fluoralkylphosphat-Salz gemäß einem der Ansprüche 1 bis 12 oder wenigstens ein Gemisch gemäß einem der Ansprüche 18 bis 24.

31. Superkondensatoren enthaltend wenigstens ein Fluoralkylphosphat-Salze gemäß einem der Ansprüche 1 bis 12 oder wenigstens ein Gemisch gemäß einem der Ansprüche 18 bis 24.

32. Galvanische Zellen enthaltend wenigstens ein Fluoralkylphosphat-Salz gemäß einem der Ansprüche 1 bis 12 oder wenigstens ein Gemisch gemäß einem der Ansprüche 18 bis 24.

## Claims

1. Fluoroalkylphosphate salts of the general formula (I)

$$(M^{a+})_b[(C_nF_{2n+1-m}H_m)_yPF_{5-y}(CR_1R_2)_xPF_{5-y}(C_nF_{2n+1-m}H_m)_y]^{(2-)}\ (a\cdot b / 2) \qquad (I)$$

in which
$M^{a+}$ a monovalent, divalent or trivalent cation,
a = 1, 2 or 3,
b = 2 for a = 1,
b = 2 for a = 3,
b = 1 for a = 2
and in each case
$1 \le n \le 8$,
$0 \le m \le 2$ for n = 1 or 2,
$0 \le m \le 4$ for $3 \le n \le 8$,
$1 \le x \le 12$,
$0 \le y \le 2$,
where $R_1$ and $R_2$ are in each case identical or different and are selected from the group consisting of fluorine, hydrogen, alkyl, fluoroalkyl and perfluoroalkyl substituents, and
where the substituents $(C_nF_{2n+1-m}H_m)$ are in each case identical or different
and the compounds where $M^{a+}$=K, $R_1$ and $R_2$=H and y=0 are excluded.

2. Fluoroalkylphosphate salts according to Claim 1, **characterised in that** the cation $M^{a+}$ is an alkali metal cation, preferably a lithium, sodium or potassium cation, particularly preferably a lithium cation.

3. Fluoroalkylphosphate salts according to Claim 1, **characterised in that** the cation $M^{a+}$ is a magnesium or aluminium cation.

4. Fluoroalkylphosphate salts according to Claim 1, **characterised in that** $M^{a+}$ is an organic cation, preferably a nitrosyl cation, a nitryl cation or an organic cation with the general formula $[N(R^7)_4]^+$, $[P(R^7)_4]^+$, $[P(N(R^7)_2)_4]^+$ or $[C(N(R^7)_2)_3]^+$, where the radicals $R^7$, in each case identically or differently, stand for
H, alkyl ($C_{1-10}$) or A,
where any H atoms in the alkyl chain may be substituted by fluorine or an aromatic radical, optionally containing heteroatoms, or a cycloalkyl radical, preferably having 5-6 members, and/or C atoms in the alkyl chain may be replaced by heteroatoms, preferably oxygen.

5. Fluoroalkylphosphate salts according to Claim 4, **characterised in that** A in each case denotes a 5- or 6-membered aromatic radical, optionally containing nitrogen and/or sulfur and/or oxygen atoms, or a cycloalkyl radical, preferably having 5 or 6 members, preferably a phenyl radical or pyridine radical.

6. Fluoroalkylphosphate salts according to Claim 1, **characterised in that** $M^{a+}$ is a heteroaromatic cation of the general formula (II) to (IX)

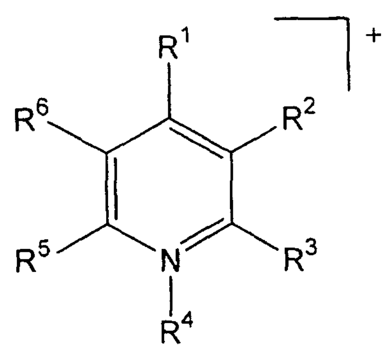
(II)

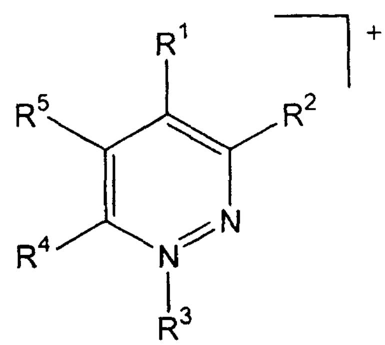
(III)

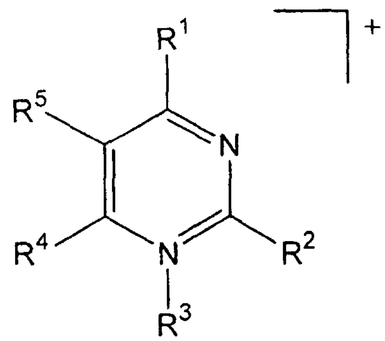

(IV)

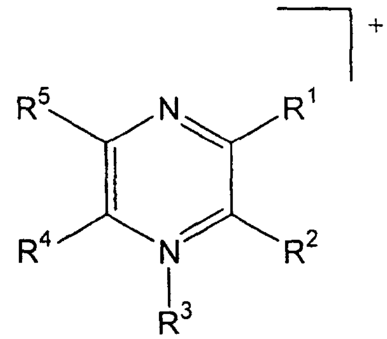

(V)

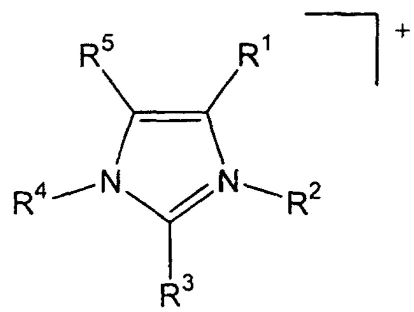

(VI)

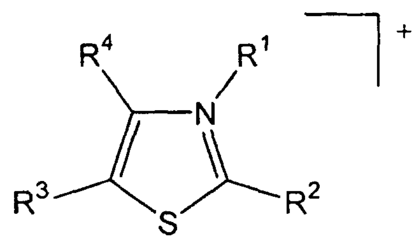

(VII)

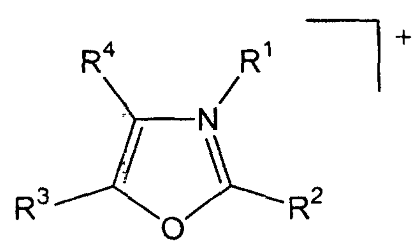

(VIII)

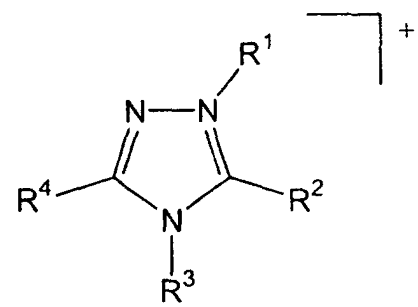

(IX)

in which the radicals $R^1$ to $R^6$, in each case identically or differently, if desired also two of the radicals $R^1$ to $R^6$ together, denote an H radical, a halogen radical, preferably a fluorine radical, or a $C_{1-8}$-alkyl radical, which may optionally be substituted by
F, Cl, $N(C_rF_{(2r+1-s)}H_s)_2$, $O(C_rF_{(2r+1-s)}H_s)$, $SO_2(C_rF_{(2r+1-s)}H_s)$ or $C_rF_{(2r+1-s)}H_s$, in which $1 \leq r \leq 6$ and $0 \leq s \leq 2r+1$, where the radicals $R^1$ to $R^6$ cannot be halogens if the radicals $R^1$ to $R^6$ are bonded directly to nitrogen.

**7.** Fluoroalkylphosphate salts according to one of Claims 1 to 6, **characterised in that** $1 \leq n \leq 6$, preferably $1 \leq n \leq 3$.

**8.** Fluoroalkylphosphate salts according to one of Claims 1 to 7, **characterised in that** $1 \leq x \leq 8$, preferably $1 \leq x \leq 4$.

**9.** Fluoroalkylphosphate salts according to one of Claims 1 to 8, **characterised in that** m = 0.

**10.** Fluoroalkylphosphate salts according to one of Claims 1 to 9, **characterised in that** y = 2.

**11.** Fluoroalkylphosphate salts according to one of Claims 1 to 10, **characterised in that** $R_1$ and $R_2$ are fluorine.

**12.** Fluoroalkylphosphate salts according to Claim 1:

$$(Li^+)_2[(C_2F_5)_2PF_3(CF_2)_2PF_3(C_2F_5)_2]^{(2-)}$$

and

$$(N(C_2H_5)_4^{\ +})_2[(C_2F_5)_2PF_3(CF_2)_2PF_3(C_2F_5)_2]^{(2-)}$$

**13.** Process for the preparation of fluoroalkylphosphate salts according to one of Claims 1 to 12, **characterised in that** at least one fluoro-α,ω-bis[(fluoroalkyl)fluorophosphorano]alkane is reacted with at least one fluoride salt of the general formula (X)

$$(M^{a+})\ [F^-]_a \qquad (X)$$

in which ($M^{a+}$) and a have the meaning according to Claims 1 to 12, in solution to give a fluoroalkylphosphate salt of the general formula (I) according to Claim 1, and the latter is, where appropriate, purified and/or isolated by conventional methods.

**14.** Process according to Claim 13, **characterised in that** the fluoro-α,ω- bis-[(fluoroalkyl)fluorophosphorano]alkane employed is at least one compound of the general formula (XI)

$$(C_nF_{2n+1-m}H_m)_yPF_{4-y}(CR_1R_2)_xPF_{4-y}(C_nF_{2n+1-m}H_m)_y \qquad (XI)$$

in which
$1 \leq n \leq 8$, $0 \leq m \leq 2$ for n = 1 or 2, $0 \leq m \leq 4$ for $3 \leq n \leq 8$, $1 \leq x \leq 12$, $0 \leq y \leq 2$,
where $R_1$ and $R_2$ are identical or different and are selected from the group consisting of fluorine, hydrogen, alkyl, fluoroalkyl and perfluoroalkyl substituents, and
where the substituents ($C_nF_{2n+1-m}H_m$) are in each case identical or different.

**15.** Process according to Claim 13 or 14, **characterised in that** the compound of the general formula (X) according to Claim 13 is employed in an excess of up to 10 fold, preferably up to 5 fold, particularly preferably up to 2 fold, based on the amount of fluoro-α,ω- bis[(fluoroalkyl)fluorophosphorano]alkane(s).

**16.** Process according to one of Claims 13 to 15, **characterised in that** the reaction with the compound of the general formula (X) according to Claim 13 is carried out at a temperature of -35 to +80°C, preferably -20 to +50°C, particularly preferably -10 to 25°C.

**17.** Process according to one of Claims 13 to 16, **characterised in that** the solvents employed are organic carbonates, preferably ethylene carbonate, propylene carbonate, butylene carbonate, dimethyl carbonate, diethyl carbonate, ethyl methyl carbonate or methyl propyl carbonate, organic esters, preferably methyl formate, ethyl formate, methyl acetate, ethyl acetate, methyl propionate, ethyl propionate, methyl butyrate, ethyl butyrate, γ-butyrolactone, organic ethers, preferably diethyl ether, dimethoxyethane, diethoxyethane, organic amides, preferably dimethylformamide or dimethylacetamide, sulfur-containing solvents, preferably dimethyl sulfoxide, dimethyl sulfide, diethyl sulfide or propane sulfone, aprotic solvents, preferably acetonitrile, acrylonitrile, propionitrile or acetone, or at least partially fluorinated derivatives of the above-mentioned solvents, or mixtures of at least two of these solvents and/or fluorinated derivatives of these solvents.

**18.** Mixture comprising

a) at least one fluoroalkylphosphate salt of the general formula (I) according to Claims 1 to 12 and

b) at least one polymer.

**19.** Mixture according to Claim 18, **characterised in that** it comprises from 5 to 90% by weight of component a) and from 95 to 5% by weight of component b), preferably from 10 to 80% by weight of component a) and from 90 to 20% by weight of component b), in each case based on the sum of components a) and b).

**20.** Mixture according to Claim 18 or 19, **characterised in that** component b) is a homopolymer or copolymer of acrylonitrile, vinylidene difluoride, methyl methacrylate, tetrahydrofuran, ethylene oxide, siloxane, phosphazene or a mixture of at least two of the above-mentioned homopolymers and/or copolymers.

**21.** Mixture according to Claim 20, **characterised in that** component b) is a homopolymer or copolymer of vinylidene difluoride, acrylonitrile, methyl methacrylate, tetrahydrofuran, preferably a homopolymer or copolymer of vinylidene difluoride.

**22.** Mixture according to one of Claims 18 to 21, **characterised in that** the polymer is at least partially crosslinked.

**23.** Mixture according to one of Claims 18 to 22, **characterised in that** it additionally comprises at least one solvent.

**24.** Mixture according to Claim 23, **characterised in that** the solvents present are organic carbonates, preferably ethylene carbonate, propylene carbonate, butylene carbonate, dimethyl carbonate, diethyl carbonate, ethyl methyl carbonate or methyl propyl carbonate, organic esters, preferably methyl formate, ethyl formate, methyl acetate, ethyl acetate, methyl propionate, ethyl propionate, methyl butyrate, ethyl butyrate, γ-butyrolactone, organic ethers, preferably diethyl ether, dimethoxyethane, diethoxyethane, organic amides, preferably dimethylformamide or dimethylacetamide, sulfur-containing solvents, preferably dimethyl sulfoxide, dimethyl sulfide, diethyl sulfide or propane sulfone, aprotic solvents, preferably acetonitrile, acrylonitrile or acetone, or at least partially fluorinated derivatives of the above-mentioned solvents, or mixtures of at least two of these solvents and/or fluorinated derivatives of these solvents.

**25.** Use of at least one fluoroalkylphosphate salt according to one of Claims 1 to 12 or at least one mixture according to one of Claims 18 to 24 in electrolytes, primary batteries, secondary batteries, capacitors, supercapacitors or galvanic cells, if desired also in combination with further conductive salts and/or additives.

**26.** Electrolytes comprising at least one fluoroalkylphosphate salt according to one of Claims 1 to 12 or at least one mixture according to one of Claims 18 to 24.

**27.** Electrolytes according to Claim 26, **characterised in that** the concentration of the fluoroalkylphosphate salt(s) in the electrolyte is 0.01 to 3 mol/l, preferably 0.01 to 2 mol/l, particularly preferably 0.1 to 1.5 mol/l.

**28.** Primary batteries containing at least one fluoroalkylphosphate salt according to one of Claims 1 to 12 or at least one mixture according to one of Claims 18 to 24.

**29.** Secondary batteries containing at least one fluoroalkylphosphate salt according to one of Claims 1 to 12 or at least one mixture according to one of Claims 18 to 24.

**30.** Capacitors containing at least one fluoroalkylphosphate salt according to one of Claims 1 to 12 or at least one mixture according to one of Claims 18 to 24.

**31.** Supercapacitors containing at least one fluoroalkylphosphate salt according to one of Claims 1 to 12 or at least one mixture according to one of Claims 18 to 24.

**32.** Galvanic cells containing at least one fluoroalkylphosphate salt according to one of Claims 1 to 12 or at least one mixture according to one of Claims 18 to 24.

## Revendications

**1.** Sels de fluoroalkylphosphate de la formule générale (I)

$$(M^{a+})_b[(C_nF_{2n+1-m}H_m)_yPF_{5-y}(CR_1R_2)_xPF_{5-y}(C_nF_{2n+1-m}H_m)_y]^{(2-)}\ (a.b\ /\ 2) \qquad (I)$$

dans laquelle
$M^{a+}$ est un cation monovalent, divalent ou trivalent,
a = 1,2 ou 3,
b = 2 pour a = 1,
b = 2 pour a = 3,
b = 1 pour a = 2
et dans chaque cas
$1 \leq n \leq 8$,
$0 \leq m \leq 2$ pour n = 1 ou 2,
$0 \leq m \leq 4$ pour $3 \leq n \leq 8$,
$1 \leq x \leq 12$,
$0 \leq y \leq 2$,
où $R_1$ et $R_2$ sont dans chaque cas identiques ou différents et sont choisis parmi le groupe constitué par des substituants de fluor, d'hydrogène, d'alkyle, de fluoroalkyle et de perfluoroalkyle, et
où les substituants ($C_nF_{2n+1-m}H_m$) sont dans chaque cas identiques ou différents
et les composés où $M^{a+}$=K, $R_1$ et $R_2$=H et y=0 sont exclus.

**2.** Sels de fluoroalkylphosphate selon la revendication 1, **caractérisés en ce que** le cation $M^{a+}$ est un cation de métal alcalin, de préférence un cation de lithium de sodium ou de potassium, de façon particulièrement préférable un cation de lithium.

**3.** Sels de fluoroalkylphosphate selon la revendication 1, **caractérisés en ce que** le cation $M^{a+}$ est un cation de magnésium ou d'aluminium.

**4.** Sels de fluoroalkylphosphate selon la revendication 1, **caractérisés en ce que** $M^{a+}$ est un cation organique, de préférence
un cation nitrosyle, un cation nitryle ou un cation organique moyennant la formule générale $[N(R^7)_4]^+$, $[P(R^7)_4]^+$, $[P(N(R^7)_2)_4]^+$ ou $[C(N(R^7)_2)_3]^+$, où les radicaux $R^7$, dans chaque cas de façon identique ou différente, représentent H, alkyl ($C_{1-10}$) ou A,
où de quelconques atomes de H dans la chaîne alkyle peuvent être substitués par fluor ou par un radical aromatique, en option contenant des hétéroatomes, ou par un radical cycloalkyle, de préférence comportant de 5 à 6 membres, et/ou des atomes de C dans la chaîne alkyle peuvent être remplacés par des hétéroatomes, de préférence oxygène.

**5.** Sels de fluoroalkylphosphate selon la revendication 4, **caractérisés en ce que** A dans chaque cas représente un radical aromatique à 5 ou 6 membres, en option contenant des atomes d'azote et/ou de soufre et/ou d'oxygène, ou un radical cycloalkyle, de préférence comportant 5 ou 6 membres, de préférence un radical phényle ou un radical pyridine.

**6.** Sels de fluoroalkylphosphate selon la revendication 1, **caractérisés en ce que** $M^{a+}$ est un cation hétéroaromatique des formules générales (II) à (IX)

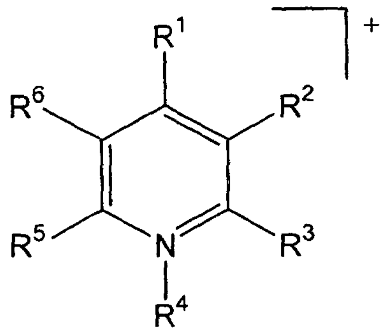

(II)

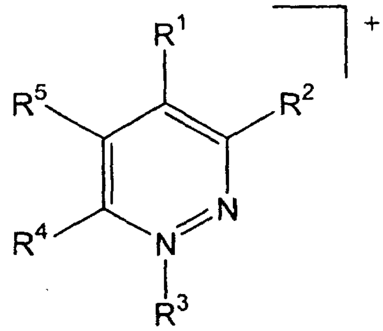

(III)

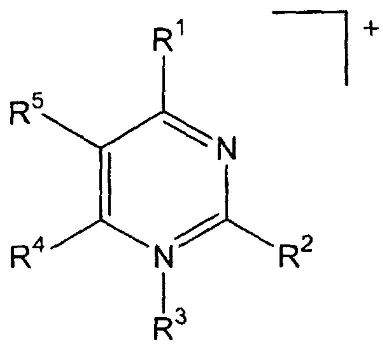

(IV)

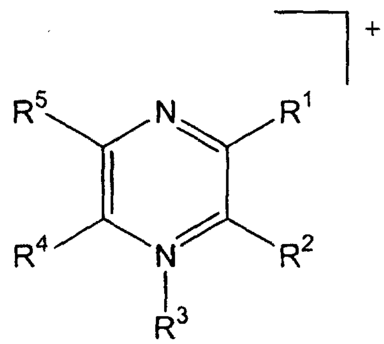

(V)

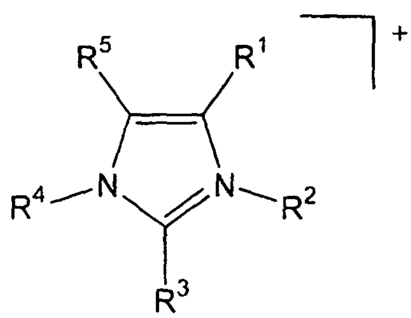

(VI)

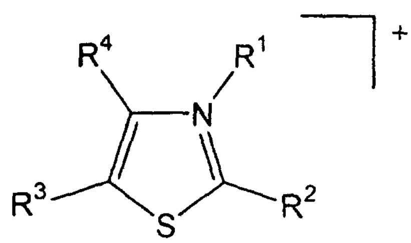

(VII)

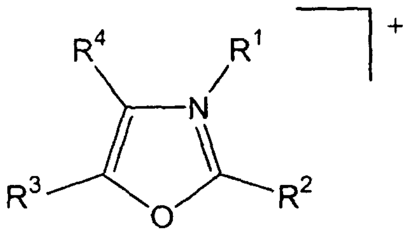

(VIII)

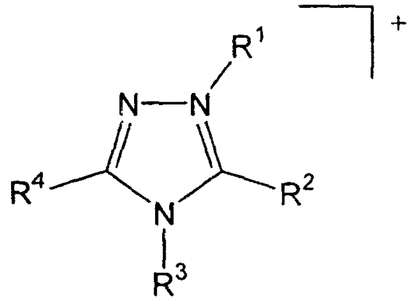

(IX)

dans lesquelles les radicaux $R^1$ à $R^6$, dans chaque cas de façon identique ou différente, si on le souhaite également deux des radicaux $R^1$ à $R^6$ en association, représentent un radical H, un radical halogène, de préférence un radical fluor, ou un radical $C_{1-8}$-alkyle, lesquels radicaux peuvent en option être substitués par F, Cl, $N(C_rF_{(2r+1-s)}H_s)_2$, $O(C_rF_{(2r+1-s)}H_s)$, $SO_2(C_rF_{(2r+1-s)}H_s)$ ou $C_rF_{(2r+1-s)}H_s$, où $1 \leq r \leq 6$ et $0 \leq s \leq 2r+1$, où les radicaux $R^1$ à $R^6$ ne peuvent pas être des halogènes si les radicaux $R^1$ à $R^6$ sont liés directement à de l'azote.

**7.** Sels de fluoroalkylphosphate selon l'une des revendications 1 à 6, **caractérisés en ce que** $1 \leq n \leq 6$, de préférence $1 \leq n \leq 3$.

**8.** Sels de fluoroalkylphosphate selon l'une des revendications 1 à 7, **caractérisés en ce que** $1 \leq x \leq 8$, de préférence $1 \leq x \leq 4$.

**9.** Sels de fluoroalkylphosphate selon l'une des revendications 1 à 8, **caractérisés en ce que** m = 0.

**10.** Sels de fluoroalkylphosphate selon l'une des revendications 1 à 9, **caractérisés en ce que** y = 2.

**11.** Sels de fluoroalkylphosphate selon l'une des revendications 1 à 10, **caractérisés en ce que** $R_1$ and $R_2$ sont du fluor.

**12.** Sels de fluoroalkylphosphate selon la revendication 1:

$$(Li^+)_2[(C_2F_5)_2PF_3(CF_2)_2PF_3(C_2F_5)_2]^{(2-)}$$

et

$$(N(C_2H_5)_4{}^+)_2[(C_2F_5)_2PF_3(CF_2)_2PF_3(C_2F_5)_2]^{(2-)}$$

**13.** Procédé pour la préparation de sels de fluoroalkylphosphate selon l'une des revendications 1 à 12, **caractérisé en ce qu'**au moins un fluoro-α,ω-bis[(fluoroalkyl)fluorophosphorano]alkane est amené à réagir avec au moins un sel de fluorure de la formule générale (X)

$$(M^{a+})\ [F^-]_a \qquad (X)$$

dans laquelle ($M^{a+}$) et a présentent la signification selon les revendications 1 à 12, en solution pour obtenir un sel de fluoroalkylphosphate de la formule générale (I) selon la revendication 1, et ce dernier est, lorsque approprié, purifié et/ou isolé au moyen de procédés classiques.

**14.** Procédé selon la revendication 13, **caractérisé en ce que** le fluoro-α,ω-bis[(fluoroalkyl)fluorophosphorano]alkane utilisé est au moins un composé de la formule générale (XI)

$$(C_nF_{2n+1-m}H_m)_yPF_{4-y}(CR_1R_2)_xPF_{4-y}(C_nF_{2n+1-m}H_m)_y \quad (XI)$$

dans laquelle
$1 \leq n \leq 8$, $0 \leq m \leq 2$ pour n = 1 ou 2, $0 \leq m \leq 4$ pour $3 \leq n \leq 8$, $1 \leq x \leq 12$, $0 \leq y \leq 2$,
où $R_1$ et $R_2$ sont identiques ou différents et sont choisis parmi le groupe constitué par des substituants de fluor, d'hydrogène, d'alkyle, de fluoroalkyle et de perfluoroalkyle, et
où les substituants $(C_nF_{2n+1-m}H_m)$ sont dans chaque cas identiques ou différents.

**15.** Procédé selon la revendication 13 ou 14, **caractérisé en ce que** le composé de la formule générale (X) selon la revendication 13 est utilisé en excès selon un facteur allant jusqu'à 10, de préférence selon un facteur allant jusqu'à 5, de façon particulièrement préférable selon un facteur allant jusqu'à 2, sur la base de la quantité de fluoro-$\alpha,\omega$-bis[(fluoroalkyl)fluorophosphorano]alkane(s).

**16.** Procédé selon l'une des revendications 13 à 15, **caractérisé en ce que** la réaction avec le composé de la formule générale (X) selon la revendication 13 est mise en oeuvre à une température de -35°C à +80°C, de préférence de -20°C à +50°C, de façon particulièrement préférable de -10°C à +25°C.

**17.** Procédé selon l'une des revendications 13 à 16, **caractérisé en ce que** les solvants utilisés sont des carbonates organiques, de préférence carbonate d'éthylène, carbonate de propylène, carbonate de butylène, carbonate de diméthyle, carbonate de diéthyle, carbonate d'éthyle méthyle ou carbonate de méthyle propyle, des esters organiques, de préférence formate de méthyle, formate d'éthyle, acétate de méthyle, acétate d'éthyle, propionate de méthyle, propionate d'éthyle, butyrate de méthyle, butyrate d'éthyle, $\gamma$-butyrolactone, des éthers organiques, de préférence éther de diéthyle, diméthoxyéthane, diéthoxyéthane, des amides organiques, de préférence diméthylformamide ou diméthylacétamide, des solvants contenant du soufre, de préférence oxyde sulfonique de diméthyle, sulfure de diméthyle, sulfure de diéthyle ou sulfone de propane, des solvants aprotiques, de préférence acétonitrile, acrylonitrile, propionitrile ou acétone, ou des dérivés au moins partiellement fluorés des solvants mentionnés ci-avant, ou des mélanges d'au moins deux de ces solvants et/ou dérivés fluorés de ces solvants.

**18.** Mélange comprenant

a) au moins un sel de fluoroalkylphosphate de la formule générale (I) selon les revendications 1 à 12 et

b) au moins un polymère.

**19.** Mélange selon la revendication 18, **caractérisé en ce qu'**il comprend de 5% à 90% en poids d'un composant a) et de 95% à 5% en poids d'un composant b), de préférence de 10% à 80% en poids du composant a) et de 90% à 20% en poids du composant b), dans chaque cas sur la base de la somme des composants a) et b).

**20.** Mélange selon la revendication 18 ou 19, **caractérisé en ce que** le composant b) est un homopolymère ou un copolymère d'acrylonitrile, de difluorure de vinylidène, de méthylméthacrylate, de tétrahydrofurane, d'oxyde d'éthylène, de siloxane, de phosphazène ou un mélange d'au moins deux des homopolymères et/ou copolymères mentionnés ci-avant.

**21.** Mélange selon la revendication 20, **caractérisé en ce que** le composant b) est un homopolymère ou un copolymère de difluorure de vinylidène, d'acrylonitrile, de méthylméthacrylate, de tétrahydrofurane, de préférence un homopolymère ou un copolymère de difluorure de vinylidène.

**22.** Mélange selon l'une des revendications 18 à 21, **caractérisé en ce que** le polymère est au moins partiellement réticulé.

**23.** Mélange selon l'une des revendications 18 à 22, **caractérisé en ce qu'**il comprend additionnellement au moins un solvant.

**24.** Mélange selon la revendication 23, **caractérisé en ce que** les solvants présents sont des carbonates organiques, de préférence carbonate d'éthylène, carbonate de propylène, carbonate de butylène, carbonate de diméthyle,

carbonate de diéthyle, carbonate d'éthyle méthyle ou carbonate de méthyle propyle, des esters organiques, de préférence formate de méthyle, formate d'éthyle, acétate de méthyle, acétate d'éthyle, propionate de méthyle, propionate d'éthyle, butyrate de méthyle, butyrate d'éthyle, γ-butyrolactone, des éthers organiques, de préférence éther diéthyle, diméthoxyéthane, diéthoxyéthane, des amides organiques, de préférence diméthylformamide ou diméthylacétamide, des solvants contenant du soufre, de préférence oxyde sulfonique de diméthyle, sulfure de diméthyle, sulfure de diéthyle ou sulfone de propane, des solvants aprotiques, de préférence acétonitrile, acrylonitrile ou acétone, ou des dérivés au moins partiellement fluorés des solvants mentionnés ci-avant, ou des mélanges d'au moins deux de ces solvants et/ou des dérivés fluorés de ces solvants.

**25.** Utilisation d'au moins un sel de fluoroalkylphosphate selon l'une des revendications 1 à 12 ou d'au moins un mélange selon l'une des revendications 18 à 24 dans des électrolytes, des piles primaires, des piles secondaires, des condensateurs, des super-condensateurs ou des cellules galvaniques, si on le souhaite également en combinaison avec d'autres sels et/ou additifs conducteurs.

**26.** Electrolytes comprenant au moins un sel de fluoroalkylphosphate selon l'une des revendications 1 à 12 ou au moins un mélange selon l'une des revendications 18 à 24.

**27.** Electrolytes selon la revendication 26, **caractérisés en ce que** la concentration en sel(s) de fluoroalkylphosphate dans l'électrolyte est de 0,01 à 3 mol/l, de préférence de 0,01 à 2 mol/l, de façon particulièrement préférable de 0,1 à 1,5 mol/l.

**28.** Piles primaires contenant au moins un sel de fluoroalkylphosphate selon l'une des revendications 1 à 12 ou au moins un mélange selon l'une des revendications 18 à 24.

**29.** Piles secondaires contenant au moins un sel de fluoroalkylphosphate selon l'une des revendications 1 à 12 ou au moins un mélange selon l'une des revendications 18 à 24.

**30.** Condensateurs contenant au moins un sel de fluoroalkylphosphate selon l'une des revendications 1 à 12 ou au moins un mélange selon l'une des revendications 18 à 24.

**31.** Super-condensateurs contenant au moins un sel de fluoroalkylphosphate selon l'une des revendications 1 à 12 ou au moins un mélange selon l'une des revendications 18 à 24.

**32.** Cellules galvaniques contenant au moins un sel de fluoroalkylphosphate selon l'une des revendications 1 à 12 ou au moins un mélange selon l'une des revendications 18 à 24.